(19) Europäisches Patentamt / European Patent Office / Office européen des brevets

(11) **EP 4 421 533 A1**

(12) **EUROPEAN PATENT APPLICATION**
published in accordance with Art. 153(4) EPC

(43) Date of publication:
**28.08.2024 Bulletin 2024/35**

(21) Application number: **22889074.5**

(22) Date of filing: **13.10.2022**

(51) International Patent Classification (IPC):
**G01S 19/27** (2010.01)     **G01S 19/24** (2010.01)
**H04B 7/185** (2006.01)

(52) Cooperative Patent Classification (CPC):
**G01S 19/24; G01S 19/27; H04B 7/185**

(86) International application number:
**PCT/CN2022/124994**

(87) International publication number:
**WO 2023/078049 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2021 CN 202111302581**

(71) Applicant: **Huawei Technologies Co., Ltd.
Shenzhen, Guangdong 518129 (CN)**

(72) Inventors:
• **ZHOU, Yue
  Shenzhen, Guangdong 518129 (CN)**
• **CHEN, Ying
  Shenzhen, Guangdong 518129 (CN)**
• **QIAO, Yunfei
  Shenzhen, Guangdong 518129 (CN)**

(74) Representative: **Grünecker Patent- und
Rechtsanwälte
PartG mbB
Leopoldstraße 4
80802 München (DE)**

(54) **COMMUNICATION METHOD AND RELATED APPARATUS**

(57) This application discloses a communication method, to reduce bit overheads in a unit of time and improve communication efficiency. A terminal device obtains first indication information, where the first indication information indicates an ephemeris parameter of a first satellite at a first moment; the terminal device determines a position and a velocity of the first satellite at a second moment based on the ephemeris parameter of the first satellite at the first moment, where the second moment is after the first moment; and if an error of the position of the first satellite at the second moment is less than a first threshold and an error of the velocity of the first satellite at the second moment is less than a second threshold, the terminal device obtains second indication information, where the second indication information indicates an ephemeris parameter of the first satellite at a third moment, the third moment is before the second moment, a ratio of a bit quantity corresponding to the first indication information or a bit quantity corresponding to the second indication information to a first time interval is less than a third threshold, and the first time interval is a time interval between the first moment and the third moment.

A terminal device obtains first indication information, where the first indication information indicates an ephemeris parameter of a first device at a first moment — 301

The terminal device determines a position and a velocity of the first device at a second moment based on the ephemeris parameter of the first device at the first moment — 302

If an error of the position of the first device at the second moment is less than a first threshold and an error of the velocity of the first device at the second moment is less than a second threshold, the terminal device obtains second indication information — 303

After the terminal device performs the method M times, the terminal device outputs a bit quantity corresponding to third indication information and a second time interval — 304

FIG. 3

EP 4 421 533 A1

**Description**

This application claims priority to Chinese Patent Application No. 202111302581.0, filed with the China National Intellectual Property Administration on November 4, 2021 and entitled "COMMUNICATION METHOD AND RELATED APPARATUS", which is incorporated herein by reference in its entirety.

**TECHNICAL FIELD**

This application relates to the field of communication technologies, and in particular, to a communication method and a related apparatus.

**BACKGROUND**

With development of information technologies, more urgent requirements are put forward for efficient and diversified communication. At present, satellites play an irreplaceable role in some important fields, such as space communication, aviation communication, and military communication. Satellite communication features a long communication distance, a large coverage area, flexible networking, and the like. The satellite can provide services for both fixed terminals and various types of mobile terminals.

A conventional terrestrial network cannot provide seamless coverage for a terminal device, especially in a place where a base station cannot be deployed, such as a sea, a desert, or the air. A non-terrestrial network is introduced into a 5th generation (5th generation, 5G) communication system, and provides seamless coverage for a terminal device by deploying a base station or some base station functions on a high-altitude platform or a satellite. The satellite has a high-speed movement characteristic, and consequently, a strong Doppler frequency shift exists between the terminal device and the satellite. In addition, a long distance between the satellite and the terminal device causes a large communication delay between the satellite and the terminal device, and causes a large time shift between the terminal device and the satellite. The terminal device may obtain an orbit parameter indicated by the satellite, and determine a position and a velocity of the satellite based on the orbit parameter. Then, the terminal device determines a Doppler shift and a time shift between the terminal device and the satellite based on the position and the velocity of the satellite, and implements time-frequency synchronization between the terminal device and the network based on the Doppler shift and the time shift.

Therefore, how the satellite indicates the orbit parameter of the satellite to the terminal device to reduce indication overheads of the communication system is a problem worth considering.

**SUMMARY**

Embodiments of this application provide a communication method and a related apparatus, to reduce bit overheads that indicate an ephemeris parameter of a satellite in a unit of time in a communication system, and improve communication efficiency.

According to a first aspect of this application, a communication method is provided. The method is applied to a terminal device. The terminal device performs the following method M times, where M is an integer greater than or equal to 1. The method includes:

The terminal device obtains first indication information, where the first indication information indicates an ephemeris parameter of a first satellite at a first moment; the terminal device determines a position and a velocity of the first satellite at a second moment based on the ephemeris parameter of the first satellite at the first moment, where the second moment is after the first moment; and if an error of the position of the first satellite at the second moment is less than a first threshold and an error of the velocity of the first satellite at the second moment is less than a second threshold, the terminal device obtains second indication information, where the second indication information indicates an ephemeris parameter of the first satellite at a third moment, the third moment is before the second moment, a ratio of a bit quantity corresponding to the first indication information or a bit quantity corresponding to the second indication information to a first time interval is less than a third threshold, and the first time interval is a time interval between the first moment and the third moment.

In the foregoing technical solution, if the error of the position of the first satellite at the second moment is less than the first threshold and the error of the velocity of the first satellite at the second moment is less than the second threshold, the terminal device obtains the second indication information. The ratio of the bit quantity corresponding to the first indication information or the bit quantity corresponding to the second indication information to the first time interval is less than the third threshold. When a precision requirement of the terminal device for the position and the velocity of the first satellite is met, indication overheads of the ephemeris parameter of the first satellite in a unit of time are less than the third threshold, so that bit overheads that indicate an ephemeris parameter of a satellite in the unit of time in a communication system are reduced, and communication performance is improved. In other words, in the technical solution of this application, an indication method for an ephemeris parameter is determined by evaluating indication overheads of the ephemeris parameter in the unit of time. Therefore, bit overheads that indicate the ephemeris parameter in the communication system are reduced, and communication efficiency is improved.

In a possible implementation, the method further includes: After the terminal device performs the method M times, the terminal device outputs a bit quantity corresponding to third indication information and a second time interval. The bit quantity corresponding to the third indication information and the second time interval are used by the first satellite to update an ephemeris parameter. The bit quantity corresponding to the third indication information is a bit quantity corresponding to indication information used by the terminal device to perform the method for the $X^{th}$ time, the second time interval is a time interval used by the terminal device to perform the method for the $X^{th}$ time, a ratio of the bit quantity of the indication information used by the terminal device to perform the method for the $X^{th}$ time to the time interval used by the terminal device to perform the method for the $X^{th}$ time is minimum, and X is an integer greater than or equal to 1 and less than or equal to M.

In this implementation, the terminal device performs the foregoing method M times, to find the time interval used by the first satellite to update the ephemeris parameter and the bit quantity corresponding to the indication information that indicates the ephemeris parameter. In this way, bit overheads generated when the first satellite updates the ephemeris parameter are reduced, to reduce indication overheads of the communication system in a unit of time, and improve communication efficiency.

In another possible implementation, the bit quantity corresponding to the third indication information includes a bit quantity corresponding to an orbit parameter of the first satellite in each dimension.

In this implementation, if the ephemeris parameter of the first satellite includes orbit parameters in a plurality of dimensions, the terminal device outputs the bit quantity corresponding to the orbit parameter in each dimension. Therefore, the first satellite determines the bit quantity corresponding to the orbit parameter in each dimension, to reduce indication overheads in a unit of time.

In another possible implementation, indication information and a time interval that are used by the terminal device to perform the method each time include at least one of the following:

a different quantity of bits in indication information is used by the terminal device to perform the method each time; and
a different time interval is used by the terminal device to perform the method each time.

In this implementation, a different quantity of bits in the indication information and/or a different time interval are/is used by the terminal device to perform the method each time, so that the terminal device can find the time interval used by the first satellite to update the ephemeris parameter and the bit quantity corresponding to the indication information that indicates the ephemeris parameter. In this way, bit overheads generated when the first satellite updates the ephemeris parameter are reduced, to reduce indication overheads of the communication system in a unit of time, and improve communication efficiency.

In another possible implementation, the ephemeris parameter of the first satellite at the first moment includes at least one of the following: a semimajor axis, an eccentricity, an inclination, a right ascension of an ascending node, an argument of perigee, a mean anomaly, a true anomaly, an argument of latitude, and an orbit type identifier of the first satellite.

The foregoing implementation shows specific content included in the ephemeris parameter of the first satellite at the first moment, which facilitates implementation of the solution. For example, the terminal device estimates the position and the velocity of the first satellite based on these ephemeris parameters. In addition, the foregoing shows the orbit parameter in each dimension, so that the first satellite can appropriately carry a necessary parameter when indication overheads are limited. Therefore, a time-frequency synchronization requirement between the terminal device and a network device is ensured while indication overheads are reduced.

In another possible implementation, the ephemeris parameter of the first satellite at the first moment includes orbit parameters of the first device in a plurality of dimensions at the first moment.

A quantity of bits that indicate an orbit parameter of the first satellite in each dimension at the first moment in the first indication information is related to a weight of the orbit parameter in the dimension, and the weight of the orbit parameter in each dimension is determined based on a type of the first satellite.

In the foregoing implementation, different types of satellites have different altitude ranges and different orbit forms. In other words, orbit parameter ranges and physical characteristics of different types of satellites are different, and actually, orbit parameter ranges of different types of satellites are discontinuous. Therefore, the orbit parameters in the dimensions have different impacts on determining positions and velocities of the different types of satellites by the terminal device. The quantity of bits that indicate the orbit parameter of the first satellite in each dimension at the first moment in the first indication information is determined based on the type of the first satellite. This helps appropriately use limited indication overheads, and further ensures a time-frequency synchronization requirement between the terminal device and the network device.

In another possible implementation, the first satellite is in a low-earth orbit position. A quantity of bits that indicate the semimajor axis of the first satellite in the first indication information is 19 bits, and a value of the semimajor axis falls within an interval [6675 km, 7875 km].

A quantity of bits that indicate the eccentricity of the first satellite in the first indication information is 13 bits, and a value of the eccentricity falls within an interval [0, 0.015].

A quantity of bits that indicate the argument of perigee of the first satellite in the first indication information is 22 bits, and a value of the argument of perigee of the first satellite falls within an interval [0, $2\pi$].

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 22 bits, and a value of the mean anomaly of the first satellite falls within an interval [0, $2\pi$].

A quantity of bits that indicate the orbit type identifier of the first satellite in the first indication information is 2 bits, and the bits that indicate the orbit type identifier of the first satellite in the first indication information indicate that an orbit type of the first satellite is a low-earth orbit.

In the foregoing implementation, with reference to the type of the first satellite, a bit quantity corresponding to the orbit parameter in each dimension in the first indication information and a value range of the orbit parameter in each dimension are shown. This facilitates the implementation of the solution. In the foregoing implementation, the bit quantity corresponding to the orbit parameter in each dimension is appropriately determined for the shown orbit parameter in each dimension. The time-frequency synchronization requirement between the terminal device and the network device is further ensured while limited indication overheads are appropriately used.

In another possible implementation, the first satellite is a medium-earth orbit satellite. A quantity of bits that indicate the semimajor axis of the first satellite in the first indication information is 23 bits, and a value of the semimajor axis falls within an interval [13378 km, 31378 km].

A quantity of bits that indicate the eccentricity of the first satellite in the first indication information is 13 bits, and a value of the eccentricity falls within an interval [0, 0.015].

A quantity of bits that indicate the argument of perigee of the first satellite in the first indication information is 22 bits, and a value of the argument of perigee of the first satellite falls within an interval [0, $2\pi$].

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 22 bits, and a value of the mean anomaly of the first satellite falls within an interval [0, $2\pi$].

A quantity of bits that indicate the orbit type identifier of the first satellite in the first indication information is 2 bits, and the bits that indicate the orbit type identifier of the first satellite in the first indication information indicate that an orbit type of the first satellite is a medium-earth orbit.

In the foregoing implementation, with reference to the type of the first satellite, a bit quantity corresponding to the orbit parameter in each dimension in another type of first indication information and a value range of the orbit parameter in each dimension are shown. This facilitates the implementation of the solution. In the foregoing implementation, the bit quantity corresponding to the orbit parameter in each dimension is appropriately determined for the shown orbit parameter in each dimension. The time-frequency synchronization requirement between the terminal device and the network device is further ensured while limited indication overheads are appropriately used.

In another possible implementation, the first satellite is a geostationary earth orbit satellite. A quantity of bits that indicate the semimajor axis of the first satellite in the first indication information is 10 bits, and a value of the semimajor axis falls within an interval [42163 km, 42165 km].

A quantity of bits that indicate the eccentricity of the first satellite in the first indication information is 9 bits, and a value of the eccentricity falls within an interval [0, 0.0005].

A quantity of bits that indicate the argument of perigee of the first satellite in the first indication information is 22 bits, and a value of the argument of perigee of the first satellite falls within an interval [0, $2\pi$].

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 7 bits, and a value of the inclination of the first satellite falls within an interval [-0.01°, +0.01°].

A quantity of bits that indicate the mean anomaly of the first satellite in the first indication information is 22 bits, and a value of the mean anomaly of the first satellite falls within an interval $[0, 2\pi]$.

A quantity of bits that indicate the orbit type identifier of the first satellite in the first indication information is 2 bits, and the bits that indicate the orbit type identifier of the first satellite in the first indication information indicate that an orbit type of the first satellite is a geostationary earth orbit.

In the foregoing implementation, with reference to the type of the first satellite, a bit quantity corresponding to the orbit parameter in each dimension in another type of first indication information and a value range of the orbit parameter in each dimension are shown. This facilitates the implementation of the solution. In the foregoing implementation, the bit quantity corresponding to the orbit parameter in each dimension is appropriately determined for the shown orbit parameter in each dimension. The time-frequency synchronization requirement between the terminal device and the network device is further ensured while limited indication overheads are appropriately used.

In another possible implementation, a quantity of bits that indicate the semimajor axis of the first satellite in the first indication information is 33 bits, and a value of the semimajor axis falls within an interval [6500 km, 43000 km].

A quantity of bits that indicate the eccentricity of the first satellite in the first indication information is 19, and a value of the eccentricity falls within an interval [0, 0.015].

A quantity of bits that indicate the argument of perigee of the first satellite in the first indication information is 24 bits, and a value of the argument of perigee of the first satellite falls within an interval $[0, 2\pi]$.

A quantity of bits that indicate the right ascension of the ascending node of the first satellite in the first indication information is 21 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 24 bits, and a value of the mean anomaly of the first satellite falls within an interval $[0, 2\pi]$.

In the foregoing implementation, a bit quantity corresponding to the orbit parameter in each dimension in another type of first indication information and a value range of the orbit parameter in each dimension are shown. When satellite types are not distinguished, the quantity of bits corresponding to the orbit parameter in each dimension is determined and obtained according to the technical solution of this application. The time-frequency synchronization requirement between the terminal device and the network device is further ensured while limited indication overheads are appropriately used.

In another possible implementation, the error of the position of the first satellite at the second moment is determined based on at least one of a cross-track position error, an along-track position error, and a radial position error of the first satellite at the second moment.

The foregoing implementation shows a manner of determining the error of the position of the first satellite at the second moment. The error of the position of the first satellite at the second moment is determined based on positions of the first satellite in a plurality of dimensions. This helps accurately determine the position error of the satellite, to further ensure the time synchronization requirement between the terminal device and the network device.

In another possible implementation, the error of the velocity of the first satellite at the second moment is determined based on at least one of a cross-track velocity error, an along-track velocity error, and a radial velocity error of the first satellite at the second moment.

The foregoing implementation shows a manner of determining the error of the velocity of the first satellite at the second moment. The error of the velocity of the first satellite at the second moment is determined based on velocities of the first satellite in a plurality of dimensions. This helps accurately determine the velocity error of the satellite, to further ensure the frequency synchronization requirement between the terminal device and the network device.

In another possible implementation, the first indication information is carried in a system information block (system information block, SIB), the first indication information indicates one or more radio control resource (radio resource control, RRC) parameters, and the one or more RRC parameters include the ephemeris parameter of the first satellite at the first moment.

In this implementation, the SIB is usually used to broadcast an RRC parameter. The first indication information may be carried in the SIB, and the first indication information indicates the one or more RRC parameters. In other words, in the technical solution of this application, the ephemeris parameter of the first satellite at the first moment may be indicated by indicating the RRC parameters. No additional signaling needs to be designed, and practicability of the solution is improved.

In another possible implementation, that the terminal device obtains first indication information includes: The terminal device receives the first indication information from a first network device. That the terminal device obtains second indication information includes: The terminal device receives the second indication information from the first network device.

According to a second aspect, this application provides a communication method, including:

A first network device sends first indication information, where the first indication information indicates an ephemeris parameter of the first satellite at a first moment. The first network device sends second indication information, where the second indication information indicates an ephemeris parameter of the first satellite at a third moment, the third moment is before the first moment, a ratio of a bit quantity corresponding to the first indication information or a bit quantity corresponding to the second indication information to a first time interval is less than a third threshold, and the first time interval is a time interval between the first moment and the third moment.

In the foregoing technical solution, the ratio of the bit quantity corresponding to the first indication information or the bit quantity corresponding to the second indication information to the first time interval is less than the third threshold, and the first time interval is a time interval between the first moment and the third moment. In other words, in the technical solution of this application, an indication method for an ephemeris parameter is determined by evaluating indication overheads of an ephemeris parameter in a unit of time. Therefore, bit overheads that indicate an ephemeris parameter in a communication system are reduced, and communication performance is improved.

In another possible implementation, the ephemeris parameter of the first satellite at the first moment includes at least one of the following: a semimajor axis, an eccentricity, an inclination, a right ascension of an ascending node, an argument of perigee, a mean anomaly, a true anomaly, an argument of latitude, and an orbit type of the first satellite.

The foregoing implementation shows specific content included in the ephemeris parameter of the first satellite at the first moment, which facilitates implementation of the solution. For example, a terminal device estimates a position and a velocity of the first satellite based on these ephemeris parameters. In addition, the foregoing shows the orbit parameter in each dimension, so that the first satellite can appropriately carry a necessary parameter when indication overheads are limited. Therefore, a time-frequency synchronization requirement between the terminal device and a network device is ensured while indication overheads are reduced.

In another possible implementation, the ephemeris parameter of the first satellite at the first moment includes orbit parameters of the first satellite in a plurality of dimensions at the first moment, and the method further includes: The first network device determines a weight of an orbit parameter in each dimension in the orbit parameters in the plurality of dimensions based on a type of the first satellite; and the first network device determines, based on the weight of the orbit parameter in each dimension, a quantity of bits that indicate the orbit parameter in each dimension in the first indication information.

In the foregoing implementation, different types of satellites have different altitude ranges and different orbit shapes. In other words, orbit parameter ranges and physical characteristics of different types of satellites are different, and actually, orbits of different types of satellites are discontinuous. Therefore, the orbit parameters in the dimensions have different impacts on determining positions and velocities of the different types of satellites by the terminal device. The first network device may determine the weight of the orbit parameter in each dimension based on the type of the first satellite, and then determine, based on the weight of the orbit parameter in each dimension, the quantity of bits that indicate the orbit parameter in each dimension in the first indication information. This helps appropriately use limited indication overheads, and further ensures a time-frequency synchronization requirement between the terminal device and the network device.

In another possible implementation, the first satellite is in a low-earth orbit position. A quantity of bits that indicate the semimajor axis of the first satellite in the first indication information is 19 bits, and a value of the semimajor axis falls within an interval [6675 km, 7875 km].

A quantity of bits that indicate the eccentricity of the first satellite in the first indication information is 13 bits, and a value of the eccentricity falls within an interval [0, 0.015].

A quantity of bits that indicate the argument of perigee of the first satellite in the first indication information is 22 bits, and a value of the argument of perigee of the first satellite falls within an interval [0, $2\pi$].

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 22 bits, and a value of the mean anomaly of the first satellite falls within an interval [0, $2\pi$].

A quantity of bits that indicate the orbit type identifier of the first satellite in the first indication information is 2 bits, and the bits that indicate the orbit type identifier of the first satellite in the first indication information indicate that an orbit type of the first satellite is a low-earth orbit.

In the foregoing implementation, with reference to the type of the first satellite, a bit quantity corresponding to the orbit parameter in each dimension the first indication information and a value range of the orbit parameter in each dimension are shown. This facilitates the implementation of the solution. In the foregoing implementation, the bit quantity corresponding to the orbit parameter in each dimension is appropriately determined for the shown orbit parameter in each dimension. The time-frequency synchronization requirement between the terminal device and the network device is further ensured while limited indication overheads are appropriately used.

In another possible implementation, the first satellite is a medium-earth orbit satellite. A quantity of bits that indicate the semimajor axis of the first satellite in the first indication information is 23 bits, and a value of the semimajor axis falls within an interval [13378 km, 31378 km].

A quantity of bits that indicate the eccentricity of the first satellite in the first indication information is 13 bits, and a value of the eccentricity falls within an interval [0, 0.015].

A quantity of bits that indicate the argument of perigee of the first satellite in the first indication information is 22 bits, and a value of the argument of perigee of the first satellite falls within an interval [0, $2\pi$].

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 22 bits, and a value of the mean anomaly of the first satellite falls within an interval [0, $2\pi$].

A quantity of bits that indicate the orbit type identifier of the first satellite in the first indication information is 2 bits, and the bits that indicate the orbit type identifier of the first satellite in the first indication information indicate that an orbit type of the first satellite is a medium-earth orbit.

In the foregoing implementation, with reference to the type of the first satellite, a bit quantity corresponding to the orbit parameter in each dimension in another type of first indication information and a value range of the orbit parameter in each dimension are shown. This facilitates the implementation of the solution. In the foregoing implementation, the bit quantity corresponding to the orbit parameter in each dimension is appropriately determined for the shown orbit parameter in each dimension. The time-frequency synchronization requirement between the terminal device and the network device is further ensured while limited indication overheads are appropriately used.

In another possible implementation, the first satellite is a geostationary earth orbit satellite. A quantity of bits that indicate the semimajor axis of the first satellite in the first indication information is 10 bits, and a value of the semimajor axis falls within an interval [42163 km, 42165 km].

A quantity of bits that indicate the eccentricity of the first satellite in the first indication information is 9 bits, and a value of the eccentricity falls within an interval [0, 0.0005].

A quantity of bits that indicate the argument of perigee of the first satellite in the first indication information is 22 bits, and a value of the argument of perigee of the first satellite falls within an interval [0, $2\pi$].

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 7 bits, and a value of the inclination of the first satellite falls within an interval [-0.01°, +0.01°].

A quantity of bits that indicate the mean anomaly of the first satellite in the first indication information is 22 bits, and a value of the mean anomaly of the first satellite falls within an interval [0, $2\pi$].

A quantity of bits that indicate the orbit type identifier of the first satellite in the first indication information is 2 bits, and the bits that indicate the orbit type identifier of the first satellite in the first indication information indicate that an orbit type of the first satellite is a geostationary earth orbit.

In the foregoing implementation, with reference to the type of the first satellite, a bit quantity corresponding to the orbit parameter in each dimension in another type of first indication information and a value range of the orbit parameter in each dimension are shown. This facilitates the implementation of the solution. In the foregoing implementation, the bit quantity corresponding to the orbit parameter in each dimension is appropriately determined for the shown orbit parameter in each dimension. The time-frequency synchronization requirement between the terminal device and the network device is further ensured while limited indication overheads are appropriately used.

In another possible implementation, a quantity of bits that indicate the semimajor axis of the first satellite in the first indication information is 33 bits, and a value of the semimajor axis falls within an interval [6500 km, 43000 km].

A quantity of bits that indicate the eccentricity of the first satellite in the first indication information is 19, and a value of the eccentricity falls within an interval [0, 0.015].

A quantity of bits that indicate the argument of perigee of the first satellite in the first indication information is 24 bits, and a value of the argument of perigee of the first satellite falls within an interval [0, $2\pi$].

A quantity of bits that indicate the right ascension of the ascending node of the first satellite in the first indication information is 21 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 24 bits, and a value of the mean anomaly of the first satellite falls within an interval $[0, 2\pi]$.

In the foregoing implementation, a bit quantity corresponding to the orbit parameter in each dimension in another type of first indication information and a value range of the orbit parameter in each dimension are shown. When satellite types are not distinguished, the quantity of bits corresponding to the orbit parameter in each dimension is determined and obtained according to the technical solution of this application. The time-frequency synchronization requirement between the terminal device and the network device is further ensured while limited indication overheads are appropriately used.

In another possible implementation, the position of the first satellite at the first moment includes at least one of the following: a cross-track position, an along-track position, and a radial position of the first satellite at the first moment.

The velocity of the first satellite includes at least one of the following: a cross-track velocity, an along-track velocity, and a radial velocity of the first satellite at the first moment.

The foregoing implementation shows specific content included in the position of the first satellite at the first moment and specific content included in the velocity of the first satellite at the first moment. In other words, the position of the first satellite is represented by positions of the first satellite in a plurality of dimensions. The velocity of the first satellite is represented by velocities of the first satellite in a plurality of dimensions. This helps the terminal device accurately determine a position and a velocity of a satellite, to further ensure the time synchronization requirement between the terminal device and the network device.

In another possible implementation, that a first network device sends first indication information includes: The first network device sends a SIB, where the SIB carries the first indication information. The first indication information indicates one or more RRC parameters, and the one or more RRC parameters include the ephemeris parameter of the first satellite at the first moment.

In this implementation, the SIB is usually used to broadcast an RRC parameter. The first indication information may be carried in the SIB, and the first indication information indicates one or more RRC parameters. In other words, in the technical solution of this application, the ephemeris parameter of the first satellite at the first moment may be indicated by indicating the RRC parameters. No additional signaling needs to be designed, and practicability of the solution is improved.

According to a third aspect of this application, a communication apparatus is provided, including:

a transceiver module, configured to obtain first indication information, where the first indication information indicates an ephemeris parameter of a first satellite at a first moment; and

a processing module, configured to determine a position and a velocity of the first satellite at a second moment based on the ephemeris parameter of the first satellite at the first moment, where the second moment is after the first moment.

The transceiver module is further configured to: if an error of the position of the first satellite at the second moment is less than a first threshold and an error of the velocity of the first satellite at the second moment is less than a second threshold, obtain second indication information.

The second indication information indicates an ephemeris parameter of the first satellite at a third moment, the third moment is before the second moment, a ratio of a bit quantity corresponding to the first indication information or a bit quantity corresponding to the second indication information to a first time interval is less than a third threshold, and the first time interval is a time interval between the first moment and the third moment.

In another possible implementation, the ephemeris parameter of the first satellite at the first moment includes at least one of the following: a semimajor axis, an eccentricity, an inclination, a right ascension of an ascending node, an argument of perigee, a mean anomaly, a true anomaly, an argument of latitude, and an orbit type identifier of the first satellite.

In another possible implementation, the ephemeris parameter of the first satellite at the first moment includes orbit parameters of the first device in a plurality of dimensions at the first moment.

A quantity of bits that indicate an orbit parameter of the first satellite in each dimension at the first moment in the first indication information is related to a weight of the orbit parameter in the dimension, and the weight of the orbit parameter in each dimension is determined based on a type of the first satellite.

In another possible implementation, the first satellite is in a low-earth orbit position. A quantity of bits that indicate the semimajor axis of the first satellite in the first indication information is 19 bits, and a value of the semimajor axis falls within an interval [6675 km, 7875 km].

A quantity of bits that indicate the eccentricity of the first satellite in the first indication information is 13 bits, and a value of the eccentricity falls within an interval [0, 0.015].

A quantity of bits that indicate the argument of perigee of the first satellite in the first indication information is 22 bits, and a value of the argument of perigee of the first satellite falls within an interval $[0, 2\pi]$.

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 22 bits, and a value of the mean anomaly of the first satellite falls within an interval $[0, 2\pi]$.

A quantity of bits that indicate the orbit type identifier of the first satellite in the first indication information is 2 bits, and the bits that indicate the orbit type identifier of the first satellite in the first indication information indicate that an orbit type of the first satellite is a low-earth orbit.

In another possible implementation, the first satellite is a medium-earth orbit satellite. A quantity of bits that indicate the semimajor axis of the first satellite in the first indication information is 23 bits, and a value of the semimajor axis falls within an interval [13378 km, 31378 km].

A quantity of bits that indicate the eccentricity of the first satellite in the first indication information is 13 bits, and a value of the eccentricity falls within an interval [0, 0.015].

A quantity of bits that indicate the argument of perigee of the first satellite in the first indication information is 22 bits, and a value of the argument of perigee of the first satellite falls within an interval $[0, 2\pi]$.

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 22 bits, and a value of the mean anomaly of the first satellite falls within an interval $[0, 2\pi]$.

A quantity of bits that indicate the orbit type identifier of the first satellite in the first indication information is 2 bits, and the bits that indicate the orbit type identifier of the first satellite in the first indication information indicate that an orbit type of the first satellite is a medium-earth orbit.

In another possible implementation, the first satellite is a geostationary earth orbit satellite. A quantity of bits that indicate the semimaj or axis of the first satellite in the first indication information is 10 bits, and a value of the semimajor axis falls within an interval [42163 km, 42165 km].

A quantity of bits that indicate the eccentricity of the first satellite in the first indication information is 9 bits, and a value of the eccentricity falls within an interval [0, 0.0005].

A quantity of bits that indicate the argument of perigee of the first satellite in the first indication information is 22 bits, and a value of the argument of perigee of the first satellite falls within an interval $[0, 2\pi]$.

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 7 bits, and a value of the inclination of the first satellite falls within an interval [-0.01°, +0.01°].

A quantity of bits that indicate the mean anomaly of the first satellite in the first indication information is 22 bits, and a value of the mean anomaly of the first satellite falls within an interval $[0, 2\pi]$.

A quantity of bits that indicate the orbit type identifier of the first satellite in the first indication information is 2 bits, and the bits that indicate the orbit type identifier of the first satellite in the first indication information indicate that an orbit type of the first satellite is a geostationary earth orbit.

In another possible implementation, a quantity of bits that indicate the semimajor axis of the first satellite in the first indication information is 33 bits, and a value of the semimajor axis falls within an interval [6500 km, 43000 km].

A quantity of bits that indicate the eccentricity of the first satellite in the first indication information is 19, and a value of the eccentricity falls within an interval [0, 0.015].

A quantity of bits that indicate the argument of perigee of the first satellite in the first indication information is 24 bits, and a value of the argument of perigee of the first satellite falls within an interval $[0, 2\pi]$.

A quantity of bits that indicate the right ascension of the ascending node of the first satellite in the first indication information is 21 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 24 bits, and a value of the mean anomaly of the first satellite falls within an interval $[0, 2\pi]$.

In another possible implementation, the error of the position of the first satellite at the second moment is determined based on at least one of a cross-track position error, an along-track position error, and a radial position error of the first satellite at the second moment.

In another possible implementation, the error of the velocity of the first satellite at the second moment is determined based on at least one of a cross-track velocity error, an along-track velocity error, and a radial velocity error of the first satellite at the second moment.

In another possible implementation, the first indication information is carried in a SIB, the first indication information indicates one or more RRC parameters, and the one or more RRC parameters include the ephemeris parameter of the first satellite at the first moment.

In another possible implementation, the transceiver module is specifically configured to:

receive the first indication information from a first network device; and
receive the second indication information from the first network device.

According to a fourth aspect of this application, a communication apparatus is provided, and includes:

a processing module, configured to determine an ephemeris parameter of a first satellite at a first moment; and
a transceiver module, configured to send first indication information, where the first indication information indicates the ephemeris parameter of the first satellite at the first moment.

The processing module is further configured to determine an ephemeris parameter of the first satellite at a third moment.

The transceiver module is further configured to send second indication information, where the second indication information indicates the ephemeris parameter of the first satellite at the third moment, the third moment is after the first moment, a ratio of a bit quantity corresponding to the first indication information or a bit quantity corresponding to the second indication information to a first time interval is less than a third threshold, and the first time interval is a time interval between the first moment and the third moment.

In another possible implementation, the ephemeris parameter of the first satellite at the first moment includes at least one of the following: a semimajor axis, an eccentricity, an inclination, a right ascension of an ascending node, an argument of perigee, a mean anomaly, a true anomaly, an argument of latitude, and an orbit type of the first satellite.

In another possible implementation, the ephemeris parameter of the first satellite at the first moment includes orbit parameters of the first satellite in a plurality of dimensions at the first moment.

The processing module is further configured to:
determine a weight of an orbit parameter in each dimension in the orbit parameters in the plurality of dimensions based on a type of the first satellite; and determine, based on the weight of the orbit parameter in each dimension, a quantity of bits that indicate the orbit parameter in each dimension in the first indication information.

In another possible implementation, the first satellite is in a low-earth orbit position. A quantity of bits that indicate the semimajor axis of the first satellite in the first indication information is 19 bits, and a value of the semimajor axis falls within an interval [6675 km, 7875 km].

A quantity of bits that indicate the eccentricity of the first satellite in the first indication information is 13 bits, and a value of the eccentricity falls within an interval [0, 0.015].

A quantity of bits that indicate the argument of perigee of the first satellite in the first indication information is 22 bits, and a value of the argument of perigee of the first satellite falls within an interval $[0, 2\pi]$.

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 22 bits, and a value of the mean anomaly of the first satellite falls within an interval $[0, 2\pi]$.

A quantity of bits that indicate the orbit type identifier of the first satellite in the first indication information is 2 bits, and the bits that indicate the orbit type identifier of the first satellite in the first indication information indicate that an orbit type of the first satellite is a low-earth orbit.

In another possible implementation, the first satellite is a medium-earth orbit satellite. A quantity of bits that indicate the semimajor axis of the first satellite in the first indication information is 23 bits, and a value of the semimajor axis falls within an interval [13378 km, 31378 km].

A quantity of bits that indicate the eccentricity of the first satellite in the first indication information is 13 bits, and a value of the eccentricity falls within an interval [0, 0.015].

A quantity of bits that indicate the argument of perigee of the first satellite in the first indication information is 22 bits, and a value of the argument of perigee of the first satellite falls within an interval [0, $2\pi$].

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 22 bits, and a value of the mean anomaly of the first satellite falls within an interval [0, $2\pi$].

A quantity of bits that indicate the orbit type identifier of the first satellite in the first indication information is 2 bits, and the bits that indicate the orbit type identifier of the first satellite in the first indication information indicate that an orbit type of the first satellite is a medium-earth orbit.

In another possible implementation, the first satellite is a geostationary earth orbit satellite. A quantity of bits that indicate the semimaj or axis of the first satellite in the first indication information is 10 bits, and a value of the semimajor axis falls within an interval [42163 km, 42165 km].

A quantity of bits that indicate the eccentricity of the first satellite in the first indication information is 9 bits, and a value of the eccentricity falls within an interval [0, 0.0005].

A quantity of bits that indicate the argument of perigee of the first satellite in the first indication information is 22 bits, and a value of the argument of perigee of the first satellite falls within an interval [0, $2\pi$].

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 7 bits, and a value of the inclination of the first satellite falls within an interval [-0.01°, +0.01°].

A quantity of bits that indicate the mean anomaly of the first satellite in the first indication information is 22 bits, and a value of the mean anomaly of the first satellite falls within an interval [0, $2\pi$].

A quantity of bits that indicate the orbit type identifier of the first satellite in the first indication information is 2 bits, and the bits that indicate the orbit type identifier of the first satellite in the first indication information indicate that an orbit type of the first satellite is a geostationary earth orbit.

In another possible implementation, a quantity of bits that indicate the semimajor axis of the first satellite in the first indication information is 33 bits, and a value of the semimajor axis falls within an interval [6500 km, 43000 km].

A quantity of bits that indicate the eccentricity of the first satellite in the first indication information is 19, and a value of the eccentricity falls within an interval [0, 0.015].

A quantity of bits that indicate the argument of perigee of the first satellite in the first indication information is 24 bits, and a value of the argument of perigee of the first satellite falls within an interval [0, $2\pi$].

A quantity of bits that indicate the right ascension of the ascending node of the first satellite in the first indication information is 21 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 24 bits, and a value of the mean anomaly of the first satellite falls within an interval [0, $2\pi$].

In another possible implementation, the position of the first satellite at the first moment includes at least one of the following: a cross-track position, an along-track position, and a radial position of the first satellite at the first moment.

The velocity of the first satellite includes at least one of the following: a cross-track velocity, an along-track velocity, and a radial velocity of the first satellite at the first moment.

In another possible implementation, the transceiver module is specifically configured to:
send a SIB, where the SIB carries the first indication information. The first indication information indicates one or more RRC parameters, and the one or more RRC parameters include the ephemeris parameter of the first satellite at the first moment.

According to a fifth aspect of this application, a communication apparatus is provided. The communication apparatus includes a processor. The processor is configured to invoke a computer program or computer instructions in a memory, to enable the processor to implement any implementation of any one of the first aspect and the second aspect.

Optionally, the communication apparatus further includes the memory.

Optionally, the memory and the processor are integrated together.

Optionally, the communication apparatus further includes a transceiver, and the processor is configured to control the transceiver to receive and send signals.

According to a sixth aspect of this application, a computer program product including instructions is provided.

When the computer program product runs on a computer, the computer is enabled to perform any implementation of any one of the first aspect and the second aspect.

According to a seventh aspect of this application, a computer-readable storage medium is provided, and includes computer instructions. When the instructions are run on a computer, the computer is enabled to perform any implementation of any one of the first aspect and the second aspect.

According to an eighth aspect of this application, a chip apparatus is provided, and includes a processor, configured to invoke a computer program or computer instructions in a memory, so that the processor performs any implementation of any one of the first aspect and the second aspect.

Optionally, the processor is coupled to the memory through an interface.

According to a ninth aspect of this application, a communication system is provided. The communication system includes the terminal device according to the first aspect and the first network device according to the second aspect.

According to a tenth aspect of embodiments of this application, a communication apparatus is provided. The communication apparatus includes a logic circuit and an input/output interface. The logic circuit is configured to perform the processing operation in any implementation of the first aspect, and the input/output interface is configured to perform the receiving and sending operations in any implementation of the first aspect.

According to an eleventh aspect of embodiments of this application, a communication apparatus is provided. The communication apparatus includes an input/output interface, and the input/output interface is configured to perform the receiving and sending operations in any implementation of the second aspect.

Optionally, the communication apparatus further includes a logic circuit, and the logic circuit is configured to perform the processing operation in any implementation of the second aspect.

According to the foregoing technical solution, it can be learned that embodiments of this application have the following advantages:

It can be learned from the foregoing technical solution that the terminal device obtains the first indication information, where the first indication information indicates an ephemeris parameter of the first satellite at the first moment; and then the terminal device determines the position and the velocity of the first satellite at the second moment based on the ephemeris parameter of the first satellite at the first moment, where the second moment is after the first moment. If the error of the position of the first satellite at the second moment is less than the first threshold and the error of the velocity of the first satellite at the second moment is less than the second threshold, the terminal device obtains the second indication information. The second indication information indicates the ephemeris parameter of the first satellite at the third moment, the third moment is before the second moment, the ratio of the bit quantity corresponding to the first indication information or the bit quantity corresponding to the second indication information to the first time interval is less than the third threshold, and the first time interval is a time interval between the first moment and the third moment. It can be learned that, in the technical solution of this application, if the error of the position of the first satellite at the second moment is less than the first threshold and the error of the velocity of the first satellite at the second moment is less than the second threshold, the terminal device obtains the second indication information. The ratio of the bit quantity corresponding to the first indication information or the bit quantity corresponding to the second indication information to the first time interval is less than the third threshold. When a precision requirement of the terminal device for the position and the velocity of the first satellite is met, indication overheads of the ephemeris parameter of the first satellite in a unit of time are less than the third threshold, so that bit overheads that indicate an ephemeris parameter of a satellite in the unit of time in the communication system are reduced, and communication efficiency is improved.

**BRIEF DESCRIPTION OF DRAWINGS**

FIG. 1 is a schematic diagram of a communication system according to an embodiment of this application;
FIG. 2 is another schematic diagram of a communication system according to an embodiment of this application;
FIG. 3 is a schematic diagram of an embodiment of a communication method according to an embodiment of this application;
FIG. 4A is a schematic diagram of a scenario of a communication method according to an embodiment of this application;
FIG. 4B is a schematic diagram of effect of a communication method according to an embodiment of this application;
FIG. 5 is a schematic diagram of another embodiment of a communication method according to an embodiment of this application;
FIG. 6 is a schematic diagram of a structure of a communication apparatus according to an embodiment of this application;
FIG. 7 is a schematic diagram of another structure of a communication apparatus according to an embodiment of this application;

FIG. 8 is a schematic diagram of a structure of a terminal device according to an embodiment of this application;

FIG. 9 is a schematic diagram of another structure of a communication apparatus according to an embodiment of this application;

FIG. 10 is a schematic diagram of another structure of a communication apparatus according to an embodiment of this application;

FIG. 11 is a schematic diagram of another structure of a communication apparatus according to an embodiment of this application; and

FIG. 12 is a schematic diagram of a structure of a communication system according to an embodiment of this application.

## DESCRIPTION OF EMBODIMENTS

Embodiments of this application provide a communication method and a related apparatus, to reduce bit overheads that indicate an ephemeris parameter of a satellite in a unit of time in a communication system, and improve communication efficiency.

Reference to "one embodiment" or "some embodiments" described in this specification means that a specific characteristic, structure or feature described in combination with this embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, at least one means one or more, and a plurality of means two or more. The term "and/or" is an association relationship for describing associated objects and represents that three relationships may exist. For example, A and/or B may represent the following three cases: Only A exists, both A and B exist, and only B exists. A and B may be singular or plural. "At least one of the following items (pieces)" or a similar expression thereof refers to any combination of these items, including any combination of singular items (pieces) or plural items (pieces). For example, at least one of a, b, or c may represent a, b, c, a and b, a and c, b and c, or a, b, and c, where a, b, and c each may be singular or plural.

The technical solution of this application may be applied to a terrestrial network system, or may be applied to a non-terrestrial network (non-terrestrial network, NTN) system.

The terrestrial network system may include a cellular communication system, an internet of things communication system, an internet of vehicles communication system, a device to device (device to device, D2D) communication system, a mobile communication system, and the like. The mobile communication system may be a 4th generation (4th generation, 4G) communication system, a worldwide interoperability for microwave access (worldwide interoperability for microwave access, WiMAX) communication system, a 5G communication system, a future mobile communication system, and the like. For example, the 4G communication system may be a long term evolution (long term evolution, LTE) system, and the 5G communication system may be a new radio (new radio, NR) system.

The non-terrestrial network system may include a satellite communication system and a high altitude platform station (high altitude platform station, HAPS) communication system, for example, an integrated communication and navigation (integrated communication and navigation, IcaN) system, a global navigation satellite system (global navigation satellite system, GNSS), and an ultra-dense low-orbit satellite communication system. The satellite communication system can be integrated with a conventional mobile communication system.

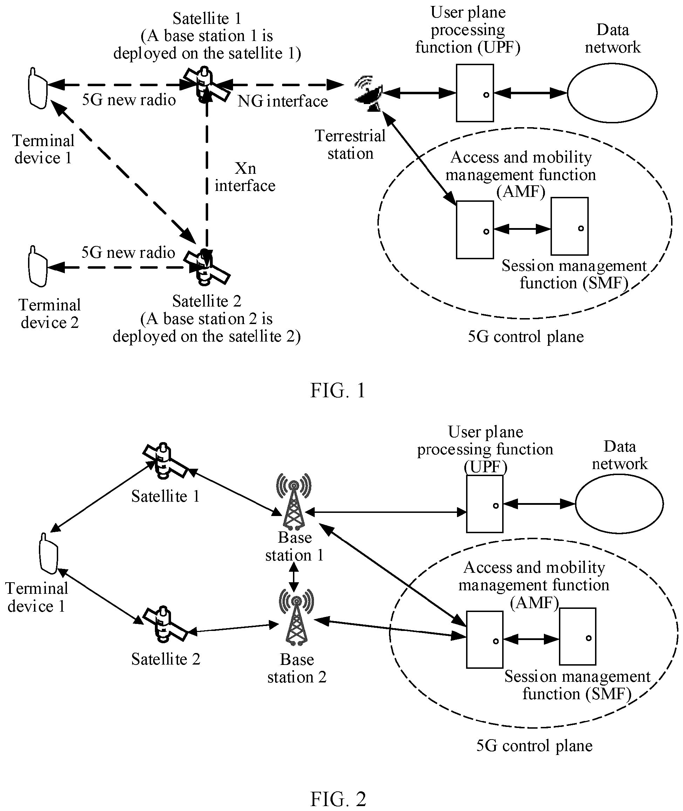

The following describes two possible communication systems to which this application is applicable with reference to FIG. 1 and FIG. 2. This application is still applicable to another communication system, and the following example does not constitute a limitation on this application.

FIG. 1 is a schematic diagram of a communication system according to an embodiment of this application. Refer to FIG. 1. In the communication system, a terminal device 1 and a terminal device 2 on the ground each access a network through a 5G new air interface. Base stations are deployed on satellites. As shown in FIG. 1, a base station 1 is deployed on a satellite 1, and a base station 2 is deployed on a satellite 2. The base station may be connected to a core network through a terrestrial station. A radio link exists between the satellite 1 and the satellite 2, and completes signaling interaction and user data transmission between the base station 1 and the base station 2.

The terminal device 1 and the terminal device 2 each may be a mobile terminal device that supports a 5G new air interface, access a satellite network through an air interface, and initiate a service such as a call or a network access service.

The base station 1 and the base station 2 mainly provide a radio access service, schedule a radio resource for an accessed terminal device, and provide a reliable radio transmission protocol, a data encryption protocol, and the like.

In the communication system shown in FIG. 1, a core network provides services such as user access control, mobility management, session management, user security authentication, and charging. The core network includes a plurality of function units, and may be specifically divided into a control plane function entity and a data plane function entity. For example, the control plane function entity includes an access and mobility management function (access and mobility management function, AMF) and a session management function (session management function, SMF). The AMF is responsible for user access management, security authentication, mobility management, and the like. The data plane function entity includes a user plane function (user plane function, UPF). The UPF is responsible for managing functions such as user plane data transmission, traffic statistics collection, and secure eavesdropping.

The terrestrial station is responsible for forwarding signaling and service data between a satellite (a base station is deployed on the satellite) and the 5G core network.

In the communication system shown in FIG. 1, a terminal device and a satellite may perform the technical solution of this application, to reduce bit overheads used by the communication system to indicate an ephemeris parameter of the satellite in a unit of time. Therefore, performance of the communication system is improved.

FIG. 2 is another schematic diagram of a communication system according to an embodiment of this application. Refer to FIG. 2. In the communication system, a terminal device 1 on the ground establishes a communication connection to a base station 1 through a satellite 1, so that the terminal device 1 accesses a network. A terminal device 2 establishes a communication connection to a base station 2 through a satellite 2, so that the terminal device 2 accesses a network. In other words, the satellite acts as a forwarding role, and is configured to forward signaling and data between the terminal device and the base station. The base station 1 and the base station 2 mainly provide a radio access service, schedule a radio resource for an accessed terminal device, and provide a reliable radio transmission protocol, a data encryption protocol, and the like.

In the communication system shown in FIG. 2, a core network includes a plurality of function units, and may be specifically divided into a control plane function entity and a data plane function entity. For example, the control plane function entity includes an AMF and an SMF. A data plane function entity includes a UPF. For function descriptions of these function entities, refer to the foregoing related descriptions. Details are not described herein again.

In the communication system shown in FIG. 2, a terminal device and a base station may perform the technical solution of this application, to reduce bit overheads used by the communication system to indicate an ephemeris parameter of a satellite in a unit of time. Therefore, performance of the communication system is improved.

A communication system to which this application is applicable includes a terminal device and a network device. If some functions of the network device are deployed on a satellite, the network device may also be referred to as a satellite. If the network device and the satellite are separately deployed, the satellite is configured to forward signaling, data, and the like between the terminal device and the network device.

The following describes some possible forms of the terminal device and the network device.

The terminal device may be a device that provides voice or data connectivity for a user. The terminal device is also referred to as user equipment (user equipment, UE), or may be referred to as a mobile station (mobile station), a subscriber unit (subscriber unit), a station (station), a terminal equipment (terminal equipment, TE), or the like. The terminal device may be a cellular phone (phone), a personal digital assistant (personal digital assistant, PDA), a wireless modem (modem), a handheld device (handheld), a laptop computer (laptop computer), a cordless phone (cordless phone), a wireless local loop (wireless local loop, WLL), a tablet computer (pad), an in-vehicle device, an entire vehicle module, a vehicle, a wearable device, a computing device, an airplane, an unmanned aerial vehicle, or the like. With development of wireless communication technologies, a device that can access a communication system, can communicate with a network side of a communication system, or can communicate with another object by using a communication system may be the terminal device in embodiments of this application, for example, a terminal device and a car in smart transportation, a household device in a smart household, an electricity meter reading instrument, a voltage monitoring instrument, an environment monitoring instrument, and the like in a smart grid, a video surveillance instrument, a cash register, and the like in an intelligent security network.

The network device supports access by a terminal device and provides communication services for the terminal device. For example, the network device may be a terrestrial device such as an evolved NodeB (evolved NodeB, eNB) in a 4G access technology communication system, a next-generation NodeB (next generation NodeB, gNB) in a 5G access technology communication system, a transmission/reception point (transmission reception point, TRP), a relay node (relay node), an access point (access point, AP), or a gateway (gateway). For example, the gateway is used for communication between the terminal device and a core network, for example, a terrestrial station. Alternatively, the network device may be a non-terrestrial device: a high-altitude base station, for example, a device such as a hot air balloon that can provide a wireless access function for the terminal device, a low-earth orbit satellite, a medium-earth orbit satellite, or a geostationary earth orbit satellite, or may be an unmanned aerial vehicle, or may be a mobile switching center and a device that functions as a base station in device-to-device (device-to-device, D2D), vehicle-to-everything (vehicle-to-everything, V2X), or machine-to-machine (machine-to-machine, M2M) communication.

The satellite has a high-speed movement characteristic, and consequently, a strong Doppler frequency shift exists between a terminal device and the satellite. In addition, a long distance between the satellite and the terminal device causes a large communication delay between the satellite and the terminal device, and causes a large time shift between the terminal device and the satellite. The terminal device may obtain an orbit parameter indicated by the satellite, and determine a position and a velocity of the satellite based on the orbit parameter. Then, the terminal device determines a Doppler shift and a time shift between the terminal device and the satellite based on the position and the velocity of the satellite, and implements time-frequency synchronization between the terminal device and the network device based on the Doppler shift and the time shift.

An ephemeris parameter of a satellite may be represented by using an orbit parameter or a position-velocity-time (position velocity time, PVT) parameter of the satellite. This is not specifically limited in this application. The following describes some orbit parameters included in the ephemeris parameter of the satellite.

The ephemeris parameter of the satellite includes at least one of the following: a semimajor axis (semimajor axis), an eccentricity (eccentricity), an inclination (inclination), a right ascension of an ascending node (right ascension of the ascending node), an argument of perigee (argument of perigee), a mean anomaly (mean anomaly), a true anomaly (true anomaly), an argument of latitude (argument of latitude), and an orbit type identifier (orbit type id) of the satellite.

The semimajor axis of the satellite is used to determine an orbit size of the satellite. The eccentricity is used to determine a shape of the satellite. The inclination is an inclination of the satellite relative to the equatorial plane. The right ascension of the ascending node is used to determine rotation of an orbital plane of the satellite. The argument of perigee is used to determine a position of a perigee of the satellite. The mean anomaly, the true anomaly, and/or the argument of latitude are/is used to determine a position of the satellite in an orbit. It can be learned that the semimajor, the eccentricity, the inclination, the right ascension of the ascending node, and the argument of perigee of the satellite represent orbit characteristics of the satellite. The mean anomaly, the true anomaly, and the argument of latitude may be used to determine a position of the satellite. The terminal device may determine a position and a velocity of the satellite by using these orbit parameters. The orbit type identifier indicates a type of the satellite. For details about the satellite type, refer to the following descriptions.

The following describes types of satellites.

Satellite types mainly include a low-earth orbit satellite (low-earth orbit satellite, LEO satellite), a medium-earth orbit satellite (medium-earth orbit satellite, MEO satellite), and a geostationary earth orbit satellite (geostationary earth orbit satellite, GEO satellite). The following describes some characteristics of the low-earth orbit satellite, the medium-earth orbit satellite, and the geostationary earth orbit satellite with reference to Table 1.

**Table 1**

| Platform (Platforms) | Altitude range (Altitude range) | Orbit (Orbit) |
|---|---|---|
| Low-earth orbit satellite | 300 km to 1500 km | Circle around the earth |
| Medium-earth orbit satellite | 7000 km to 25000 km | |
| Geostationary earth orbit satellite | 35786 km | Maintain a position relative to an altitude and an azimuth of a given earth point |

It can be learned from the above that Table 1 represents that the altitude ranges of the low-earth orbit satellite, the medium-earth orbit satellite, and the geostationary earth orbit satellite do not extend with each other. The orbits of the low-earth orbit satellite and the medium-earth orbit satellite are circular. The geostationary earth orbit satellite maintains a position relative to an altitude and an azimuth of a given earth point.

Currently, different types of satellites indicate orbit parameters of the satellites to the terminal device by using a unified ephemeris orbit parameter format. It can be learned from Table 1 that different types of satellites have different altitude ranges and different orbit shapes. In other words, orbit parameter ranges and physical characteristics of different types of satellites are different, and actually, orbits of different types of satellites are discontinuous. Therefore, using the unified ephemeris orbit parameter format to indicate the orbit parameter causes a waste of signaling overheads, and indication overheads of a communication system are high. In view of this, this application provides a corresponding technical solution, to reduce bit overheads that indicate an ephemeris parameter of a satellite in a unit of time in the communication system.

The technical solution of this application is described below with reference to specific embodiments.

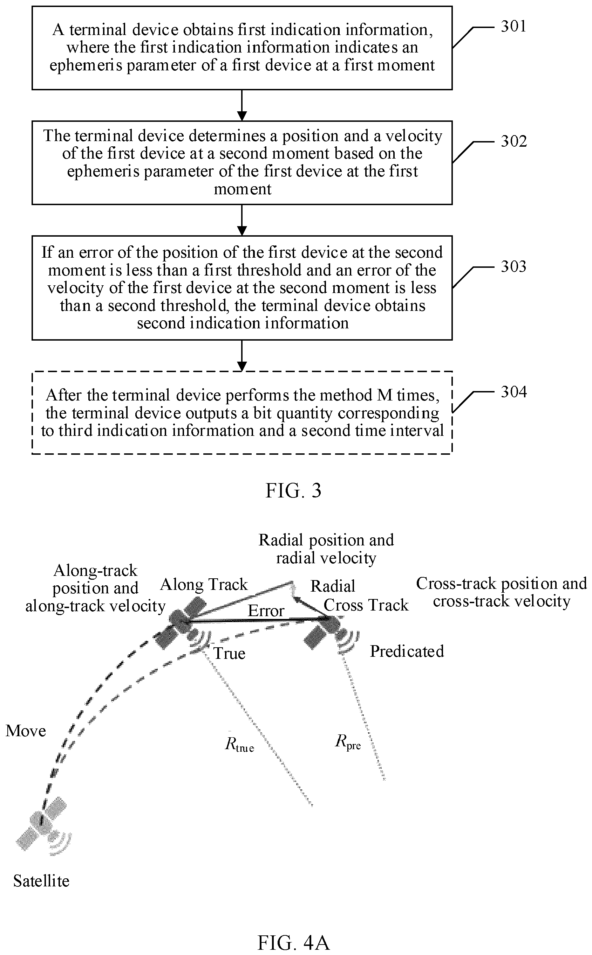

FIG. 3 is a schematic diagram of an embodiment of a communication method according to an embodiment of this application. Refer to FIG. 3. The method is applied to a terminal device, the terminal device performs the method M times, and the method includes the following steps.

301: The terminal device obtains first indication information, where the first indication information indicates an ephemeris parameter of a first satellite at a first moment.

Optionally, the ephemeris parameter of the first satellite at the first moment includes an orbit parameter of the first satellite at the first moment, or a PVT parameter of the first satellite at the first moment. This is not specifically limited in this application. The following describes the technical solution of this application by using an example in which the ephemeris parameter of the first satellite at the first moment includes the orbit parameter of the first satellite at the first moment.

In some implementations, the ephemeris parameter of the first satellite at the first moment includes at least one of the following: a semimajor axis, an eccentricity, an inclination, a right ascension of an ascending node, an argument of perigee, a mean anomaly, a true anomaly, an argument of latitude, and an orbit type identifier of the first satellite. For the usage of these parameters, refer to the foregoing related descriptions.

Optionally, the ephemeris parameter of the first satellite at the first moment includes orbit parameters of the first device in a plurality of dimensions at the first moment. A quantity of bits that indicate an orbit parameter of the first satellite in each dimension at the first moment in the first indication information is related to a weight of the orbit parameter in the dimension, and the weight of the orbit parameter in each dimension is determined based on a type of the first satellite.

The following shows, with reference to Table 2, the orbit parameters in the plurality of dimensions included in the ephemeris parameter of the first satellite at the first moment.

**Table 2**

| Dimension | Orbit parameter |
|-----------|-----------------|
| 1 | Semimajor axis |
| 2 | Eccentricity |
| 3 | Inclination |
| 4 | Right ascension of the ascending node |
| 5 | Argument of perigee |
| 6 | Mean anomaly, true anomaly, or argument of latitude |

The orbit parameters shown in Table 2 have different degrees of impact on a position and a velocity of the first satellite estimated by the terminal device. It should be noted that, if the ephemeris parameter of the first satellite at the first moment includes the orbit type identifier, an orbit parameter in the dimension of the orbit type identifier may not participate in a weight setting process. Therefore, Table 2 shows only the orbit parameters in the six dimensions. Therefore, when a bit quantity corresponding to the first indication information is limited, the weight of the orbit parameter in each dimension may be directly proportional to a degree of impact of the orbit parameter in the dimension on estimation of the position and the velocity of the first satellite by the terminal device. The degree of impact of the orbit parameter in each dimension on estimation of the position and the velocity of the first satellite by the terminal device is related to a type of the first satellite, and is analyzed below.

For example, the first satellite is a low-earth orbit satellite or a medium-earth orbit satellite. It can be learned from the foregoing descriptions that an orbit of the low-earth orbit satellite and an orbit of the medium-earth orbit satellite are both circular orbits, and eccentricities of the satellites are close to 0. Therefore, a weight of the eccentricity may be small. In other words, a small quantity of bits may indicate the eccentricity in the first indication information, or a small proportion of bits may indicate the eccentricity in the first indication information. The eccentricity is small, and a corresponding perigee position is not obvious. Therefore, a weight of the argument of perigee may also be small. In other words, a small quantity of bits may indicate the argument of perigee in the first indication information, or a small proportion of bits may indicate the argument of perigee in the first indication information. For the low-earth orbit satellite or the medium-earth orbit satellite, two orbit parameters: the inclination of the orbit and the right ascension of the ascending node, determine a position of the orbit relative to the earth, and the terminal device finally determines a specific position of the satellite in the orbit with reference to the mean anomaly. Therefore, a weight of the inclination, a weight of the right ascension of the ascending node, and a weight of the mean anomaly should be large. In other words, in the first indication information, a quantity of bits that indicate the inclination, a quantity of bits that indicate the right ascension of the ascending node, and the quantity of bits that indicate the mean anomaly may be large. Alternatively, in the first indication information, a proportion of bits that indicate the inclination is large, a proportion of bits that indicate the right ascension of the ascending node is large, and a proportion of bits that indicate the mean anomaly is large.

For example, the first satellite is a geostationary earth orbit satellite. It can be learned from the foregoing descriptions that an altitude of an orbit of the geostationary earth orbit satellite is fixed, an inclination of the orbit is almost 0, and an eccentricity is almost 0. Therefore, a right ascension of an ascending node and an argument of perigee have little effect on an orbit shape. Therefore, weights of these orbit parameters may be 0 or small. In other words, the first indication information may not indicate these orbit parameters, or fewer bits are allocated to indicate these orbit parameters. A mean anomaly can determine a position and a velocity of the geostationary earth orbit satellite, to ensure tracking of the satellite and the velocity of the geostationary earth orbit satellite. Therefore, a weight of the mean anomaly should be large. In other words, a large quantity of bits indicates the mean anomaly in the first indication information.

With reference to the type of the first satellite, the following describes some possible bit allocation formats (which may also be referred to as an ephemeris orbit parameter format, and two description manners in this specification may be interchanged) that indicate the orbit parameter in each dimension in the first indication information and value ranges of the orbit parameter in each dimension.

Implementation 1: A quantity of bits that indicate the semimaj or axis of the first satellite in the first indication information is 19 bits, and a value of the semimajor axis falls within an interval [6675 km, 7875 km]. A quantity of bits that indicate the eccentricity of the first satellite in the first indication information is 13 bits, and a value of the eccentricity falls within an interval [0, 0.015] . A quantity of bits that indicate the argument of perigee of the first satellite in the first indication information is 22 bits, and a value of the argument of perigee of the first satellite falls within an interval $[0, 2\pi]$. A quantity of bits that indicate the right ascension of the ascending node of the first satellite in the first indication information is 20 bits, and a value of the right ascension of the ascending node of the first satellite falls within an interval [-180°, +180°]. A quantity of bits that indicate the inclination of the first satellite in the first indication information is 20 bits, and a value of the inclination of the first satellite falls within an interval [-90°, +90°]. A quantity of bits that indicate the mean anomaly of the first satellite in the first indication information is 22 bits, and a value of the mean anomaly of the first satellite falls within an interval $[0, 2\pi]$. A quantity of bits that indicate the orbit type identifier of the first satellite in the first indication information is 2 bits, and the bits that indicate the orbit type identifier of the first satellite in the first indication information indicate that an orbit type of the first satellite is a low-earth orbit.

In Implementation 1, the first satellite may be a low-earth orbit satellite, and the bit quantity corresponding to the first indication information is 118 bits. Implementation 1 shows an orbit parameter ephemeris format used by the low-earth orbit satellite.

When the first satellite is the low-earth orbit satellite, the bit quantity corresponding to the first indication information may be 118 bits, 119 bits, or 120 bits. Alternatively, the bit quantity corresponding to the first indication information may be 15 bytes or 16 bytes.

For example, when a bit quantity of indication information corresponding to the low-earth orbit satellite is limited to be less than or equal to 15 bytes, and the bit allocation format shown in Implementation 1 has a total of 118 bits, a bit quantity corresponding to an orbit parameter in a dimension or some dimensions may be increased with reference to an actual requirement.

Implementation 2: A quantity of bits that indicate the semimajor axis of the first satellite in the first indication information is 23 bits, and a value of the semimajor axis falls within an interval [13378 km, 31378 km]. A quantity of bits that indicate the eccentricity of the first satellite in the first indication information is 13 bits, and a value of the eccentricity falls within an interval [0, 0.015]. A quantity of bits that indicate the argument of perigee of the first satellite in the first indication information is 22 bits, and a value of the argument of perigee of the first satellite falls within an interval $[0, 2\pi]$. A quantity of bits that indicate the right ascension of the ascending node of the first satellite in the first indication information is 20 bits, and a value of the right ascension of the ascending node of the first satellite falls within an interval [-180°, +180°]. A quantity of bits that indicate the inclination of the first satellite in the first indication information is 20 bits, and a value of the inclination of the first satellite falls within an interval [-90°, +90°]. A quantity of bits that indicate the mean anomaly of the first satellite in the first indication information is 22 bits, and a value of the mean anomaly of the first satellite falls within an interval $[0, 2\pi]$. A quantity of bits that indicate the orbit type identifier of the first satellite in the first indication information is 2 bits, and the bits that indicate the orbit type identifier of the first satellite in the first indication information indicate that an orbit type of the first satellite is a medium-earth orbit.

In Implementation 2, the first satellite may be a medium-earth orbit satellite, and the bit quantity corresponding to the first indication information is 122 bits. Implementation 2 shows an orbit parameter ephemeris format used by the medium-earth orbit satellite.

When the first satellite is the medium-earth orbit satellite, the bit quantity corresponding to the first indication information may be 122 bits, 123 bits, or 124 bits. Alternatively, the bit quantity corresponding to the first indication information may be 16 bytes or 17 bytes. For example, when a bit quantity of indication information corresponding to the medium-earth orbit satellite is limited to be less than or equal to 16 bytes, and the bit allocation format shown in Implementation 2 has a total of 122 bits, a bit quantity corresponding to an orbit parameter in a dimension or some dimensions may be increased with reference to an actual requirement.

Implementation 3: A quantity of bits that indicate the semimaj or axis of the first satellite in the first indication information is 10 bits, and a value of the semimajor axis falls within an interval [42163 km, 42165 km]. A quantity of bits that indicate the eccentricity of the first satellite in the first indication information is 9 bits, and a value of the eccentricity falls within an interval [0, 0.0005]. A quantity of bits that indicate the argument of perigee of the first satellite in the first indication information is 22 bits, and a value of the argument of perigee of the first satellite falls within an interval $[0, 2\pi]$.

A quantity of bits that indicate the right ascension of the ascending node of the first satellite in the first indication information is 20 bits, and a value of the right ascension of the ascending node of the first satellite falls within an interval [-180°, +180°]. A quantity of bits that indicate the inclination of the first satellite in the first indication information is 7 bits, and a value of the inclination of the first satellite falls within an interval [-0.01°, +0.01°]. A quantity of bits that indicate the mean anomaly of the first satellite in the first indication information is 22 bits, and a value of the mean anomaly of the first satellite falls within an interval $[0, 2\pi]$. A quantity of bits that indicate the orbit type identifier of the first satellite in the first indication information is 2 bits, and the bits that indicate the orbit type identifier of the first satellite in the first indication information indicate that an orbit type of the first satellite is a geostationary earth orbit.

In Implementation 3, the first satellite may be a geostationary earth orbit satellite, and the bit quantity corresponding to the first indication information is 12*8 bits, that is, 12 bytes. Implementation 3 shows an orbit parameter ephemeris format used by the geostationary earth orbit satellite.

In Implementation 3, the first satellite may be the geostationary earth orbit satellite, and the bit quantity corresponding to the first indication information is 92 bits. Implementation 3 shows an orbit parameter ephemeris format used by the geostationary earth orbit satellite.

When the first satellite is the geostationary earth orbit satellite, the bit quantity corresponding to the first indication information may be 92 bits, 93 bits, or 94 bits. Alternatively, the bit quantity corresponding to the first indication information may be 12 bytes or 13 bytes. For example, when a bit quantity of indication information corresponding to the geostationary earth orbit satellite is limited to be less than or equal to 12 bytes, and the bit allocation format shown in Implementation 2 has a total of 92 bits, a bit quantity corresponding to an orbit parameter in a dimension or some dimensions may be increased with reference to an actual requirement.

It can be learned from the foregoing implementations that, in this application, the weight of the orbit parameter in each dimension is determined with reference to the type of the first satellite, and then the quantity of bits that indicate the orbit parameter in each dimension in the first indication information is determined with reference to the weight of the orbit parameter in each dimension. In this way, when a precision requirement of a position and a velocity of the terminal device that are estimated on a terminal device side is met, indication overheads that indicate orbit parameters in a communication system are reduced.

The foregoing describes, based on the type of the first satellite, some possible bit allocation formats that indicate the orbit parameter in each dimension in the first indication information and the value range of the orbit parameter in each dimension. The following describes a possible bit allocation format that indicates the orbit parameter in each dimension in the first indication information and a value range of the orbit parameter in each dimension when the type of the first satellite is not distinguished.

A quantity of bits that indicate the semimajor axis of the first satellite in the first indication information is 33 bits, and a value of the semimajor axis falls within an interval [6500 km, 43000 km]. A quantity of bits that indicate the eccentricity of the first satellite in the first indication information is 19 bits, and a value of the eccentricity falls within an interval [0, 0.015]. A quantity of bits that indicate the argument of perigee of the first satellite in the first indication information is 24 bits, and a value of the argument of perigee of the first satellite falls within an interval $[0, 2\pi]$. A quantity of bits that indicate the right ascension of the ascending node of the first satellite in the first indication information is 21 bits, and a value of the right ascension of the ascending node of the first satellite falls within an interval [-180°, +180°]. A quantity of bits that indicate the inclination of the first satellite in the first indication information is 20 bits, and a value of the inclination of the first satellite falls within an interval [-90°, +90°]. A quantity of bits that indicate the mean anomaly of the first satellite in the first indication information is 24 bits, and a value of the mean anomaly of the first satellite falls within an interval $[0, 2\pi]$.

In an implementation, a quantity of bits corresponding to the first indication information is 18*8 bits, that is, 18 bytes. The first satellite may be a low-earth orbit satellite, a medium-earth orbit satellite, or a geostationary earth orbit satellite. Optionally, the first indication information further indicates an orbit type of the first satellite. A quantity of bits that indicate an orbit type identifier of the first satellite in the first indication information is 2 bits. For example, if a value of the two bits is " 11", it indicates that a type of a satellite is not distinguished.

Optionally, the terminal device receives the first indication information from a first network device.

In a possible implementation, the terminal device accesses the first network device, and the first network device is deployed on the first satellite. In other words, the first network device may be referred to as the first satellite; or the first network device and the first satellite are separately deployed.

For example, as shown in FIG. 1, the terminal device 1 accesses the base station 1, and the base station 1 is deployed on the satellite 1. That is, the terminal device may access the satellite 1. The satellite 1 may send first indication information to the terminal device 1, to indicate an ephemeris parameter of the satellite 1 at a moment T0.

In another possible implementation, the terminal device accesses a second network device, and the second network device is deployed on the first satellite. In other words, the second network device may be referred to as the first satellite; or the second network device and the first satellite are separately deployed. There is a communication link between the first network device and the second network device, and the second network device may schedule the first network device to send the first indication information to the terminal device.

For example, as shown in FIG. 1, the terminal device 1 accesses the base station 1, and the base station 1 is deployed on the satellite 1. That is, the terminal device 1 may access the satellite 1. The satellite 1 is connected to the satellite 2 through an Xn interface, and the satellite 1 may schedule the satellite 2 to send first indication information to the terminal device 1. In other words, the satellite 2 sends the first indication information to the terminal device 1, to indicate an ephemeris parameter of the satellite 1 at a moment T0.

For example, as shown in FIG. 2, the terminal device 1 accesses the base station 1, and the base station 1 communicates with the terminal device 1 through the satellite 1. The base station 1 and the base station 2 may be connected through an Xn interface, and the base station 1 may schedule the base station 2 to send the first indication information to the terminal device 1. The base station 2 forwards the first indication information to the terminal device 1 through the satellite 2.

It should be noted that, optionally, the terminal device receives a system information block (system information block, SIB) from the first network device. The SIB carries the first indication information, the first indication information indicates one or more RRC parameters, and the one or more RRC parameters include the ephemeris parameter of the first satellite at the first moment. In actual application, the first network device may alternatively send the first indication information to the terminal device by using other broadcast signaling. This is not specifically limited in this application. For example, the first network device sends the first indication information to the terminal device by using a master information block (master information block, MIB).

With reference to Table 3, the following describes a possible example of the one or more RRC parameters indicated by the first indication information. The one or more RRC parameters are ephemeris parameters of the first satellite at the first moment.

**Table 3**

| Name of the RRC parameter | Physical meaning | Value range of the RRC parameter |
|---|---|---|
| Serving satellite ephemeris low earth-orbit semimajor axis (ServingSatelliteEphemerisLEOSemiMaj or Axis) | Indicate the following ephemeris orbit parameter of a serving low earth orbit satellite: semimajor axis a[m] | [6678000, 7878000] |
| Serving satellite ephemeris medium-earth orbit semimajor axis (Serving SatelliteEphemerisMEOSemiMaj orAxis) | Indicate the following ephemeris orbit parameter of a serving medium earth orbit satellite: semimajor axis a[m] | [13378000, 31378000] |
| Serving satellite ephemeris geostationary earth orbit semimajor axis (ServingSatelliteEphemerisGEOSemiMajorAxis) or serving satellite ephemeris geosynchronous orbit semimajor axis (ServingSatelliteEphemerisGSOSemiMajorAxis) | Indicate the following ephemeris orbit parameter of a serving geostationary earth orbit satellite: semimajor axis a[m] | [42163000, 42165000] |
| Serving satellite ephemeris longitude of the ascending node (ServingSatellite EphemerisLongitudeOfAscendingNode) | Indicate the following ephemeris orbit parameter of a serving satellite: right ascension of the ascending node S2 [degree] | [-180°, +180°] |
| Serving satellite ephemeris non-geosynchronous orbit inclination (ServingSatelliteEphemerisNGSOInclination) | Indicate the following ephemeris orbit parameter of a serving non-geosynchronous orbit satellite: inclination i [degree] | [-90°, +90°] |
| Serving satellite ephemeris geosynchronous orbit inclination (ServingSatelliteEphemerisGSOInclination) or serving geostationary earth orbit inclination (ServingSatelliteEphemerisGEO Inclination) | Indicate the following ephemeris orbit parameter of a serving geosynchronous orbit satellite: inclination i [degree] | [-0.01°, +0.01°] |

(continued)

| Name of the RRC parameter | Physical meaning | Value range of the RRC parameter |
|---|---|---|
| Serving satellite ephemeris non-geosynchronous orbit eccentricity (ServingSatelliteEphemerisNGSOEccentricity) | Indicate the following ephemeris orbit parameter of a serving non-geosynchronous orbit satellite: eccentricity e | [0, 0.015] |
| Serving satellite ephemeris geosynchronous orbit eccentricity (ServingSatelliteEphemerisNGSOEccentricity) | Indicate the following ephemeris orbit parameter of a serving geosynchronous orbit satellite: eccentricity e | [0, 0.0005] |
| Serving satellite ephemeris mean anomaly (ServingSatelliteEphemerisMeanAnomaly) | Indicate the following ephemeris orbit parameter of a serving satellite: mean anomaly M[angle] at the epoch moment T0 | $[0, 2\pi]$ |
| Serving satellite ephemeris type (ServingSatelliteEphemerisType) | Indicate the following ephemeris orbit parameter of a serving satellite: orbit type identifier (OrbitTypeID) (LEO, MEO, GEO) | [0 (LEO), 1 (MEO), 2 (GEO)] |

That is, the one or more RRC parameters indicate the ephemeris parameter of the first satellite at the first moment. That is, the first network device indicates the ephemeris parameter of the first satellite at the first moment by indicating the RRC parameters.

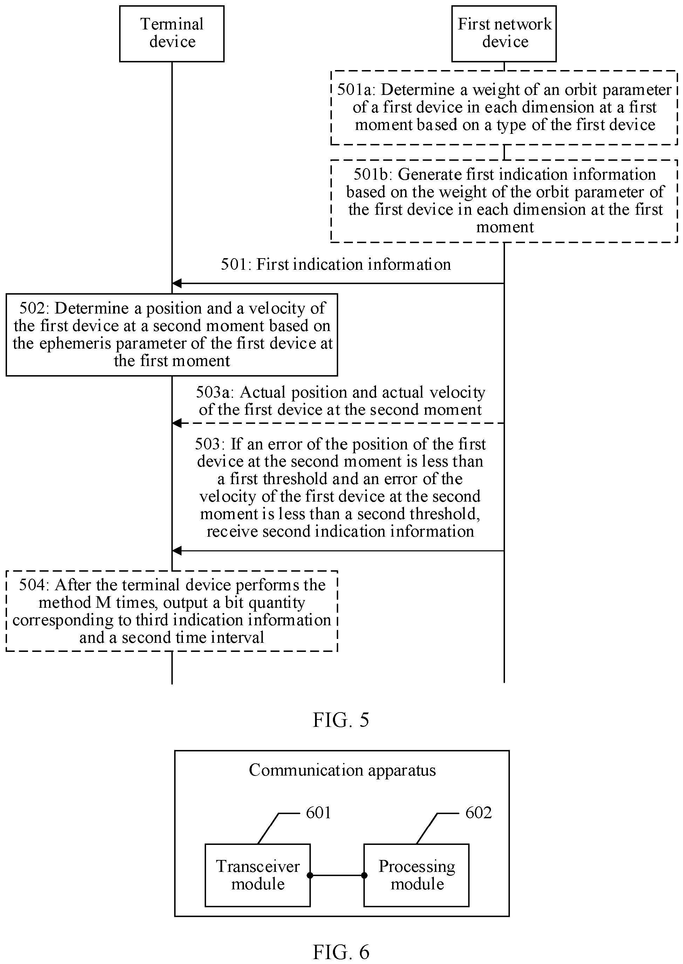

For more processes in which the first network device sends the first indication information to the terminal device, refer to related descriptions of the embodiment shown in FIG. 5 below. Details are not described herein again.

It should be noted that the table shown in this specification may be split into a plurality of tables, or different tables may be combined into one table. This is not specifically limited in this application.

302: The terminal device determines a position and a velocity of the first satellite at a second moment based on the ephemeris parameter of the first satellite at the first moment.

The second moment is after the first moment. The position of the first satellite at the second moment includes at least one of the following: a cross-track position, an along-track position, an absolute position, and a radial position of the first satellite at the second moment. The velocity of the first satellite at the second moment includes at least one of the following: a cross-track velocity, an along-track velocity, an absolute velocity, and a radial velocity of the first satellite at the second moment.

For example, as shown in FIG. 4A, the first indication information indicates an ephemeris parameter of the first satellite at a moment $T_0$. The terminal device estimates a position and a velocity of the first satellite at a moment $T_0 + \Delta T$ based on the ephemeris parameter of the first satellite at the moment $T_0$. The position of the first satellite at the moment $T_0 + \Delta T$ includes at least one of the following: a cross-track position, an along-track position, an absolute position, and a radial position of the first satellite at the moment $T_0 + \Delta T$. The velocity of the first satellite at the moment $T_0 + \Delta T$ includes at least one of the following: a cross-track velocity, an along-track velocity, an absolute velocity, and a radial velocity of the first satellite at the moment $T_0 + \Delta T$.

The following describes a specific process in which the terminal device estimates the position and the velocity of the first satellite at the second moment based on the ephemeris parameter of the first satellite at the first moment.

The terminal device may determine, by using the semimajor axis, the eccentricity, the inclination, the right ascension of the ascending node, and the argument of perigee of the first satellite at the first moment, an orbit in which the first satellite is currently located. The terminal device determines a current position and a current velocity of the first satellite with reference to the mean anomaly, the true anomaly, or the argument of latitude of the first satellite at the first moment and the orbit in which the first satellite is currently located. Then, the terminal device obtains the position and the velocity of the first satellite at the second moment through calculation based on a disturbance condition and the current position and velocity of the first satellite. The disturbance condition includes at least one of the following: atmospheric drag, solar wind, the solar gravity, the lunar gravity, unevenness of the earth gravity, and the like. Factors considered when the terminal device determines the position and the velocity of the first satellite at the second moment depend on a complexity of establishing a physical constraint condition. In an ideal condition, the terminal device may determine an average angular velocity of the first satellite on an equivalent circular orbit based on the orbit parameter of the first satellite at the first moment. In this case, the terminal device may determine a phase of the first satellite on the equivalent circular orbit at the second moment, and convert the phase into a position and a velocity that correspond to an actual elliptical orbit.

303: If an error of the position of the first satellite at the second moment is less than a first threshold and an error of the velocity of the first satellite at the second moment is less than a second threshold, the terminal device obtains second indication information.

The second indication information indicates an ephemeris parameter of the first satellite at a third moment, and the third moment is before the second moment. The ephemeris parameter of the first satellite at the third moment is similar to the ephemeris parameter of the first satellite at the first moment in step 301. For details, refer to the foregoing related descriptions.

A bit quantity corresponding to the first indication information is the same as a bit quantity corresponding to the second indication information, and a bit allocation format in the second indication information is the same as the bit allocation format in the first indication information. For some possible bit allocation formats of the second indication information and a value range of the orbit parameter in each dimension, refer to the related descriptions of the first indication information.

A ratio of the bit quantity corresponding to the first indication information or the bit quantity corresponding to the second indication information to a first time interval is less than a third threshold. Alternatively, the ratio of the bit quantity corresponding to the first indication information or the bit quantity corresponding to the second indication information to the first time interval is less than or equal to the third threshold. The first time interval is a time interval between the first moment and the third moment.

Optionally, a value of the third threshold depends on a capacity of the communication system for broadcast signaling. For example, if a capacity reserved for broadcast signaling in the communication system is designed small, bit overheads in a unit of time need to be reduced to ensure that the communication system can provide sufficient capacity for sending control signaling and data signaling. In this way, communication quality of a user is ensured, and communication experience of the user is improved. In other words, in this case, the third threshold needs to be small.

For example, if the bit quantity corresponding to the first indication information or the bit quantity corresponding to the second indication information is BitsNum1, and the first time interval is ValidTime1, bit overheads Cost1 per unit of time in the communication system are BitsNum1/ValidTime1.

Specifically, the terminal device may obtain an actual position and an actual velocity of the first satellite at the second moment. The terminal device determines the error of the position of the first satellite at the second moment by using the actual position and the position obtained through calculation in step 302. Alternatively, the terminal device determines the velocity of the first satellite at the second moment by using the actual velocity and the velocity obtained through calculation in step 302. If the error of the position of the first satellite at the second moment is greater than the first threshold, or the error of the velocity of the first satellite at the second moment is greater than the second threshold, the terminal device obtains the second indication information.

In some implementations, at least one of the following factors may be considered for setting values of the first threshold and the second threshold: a maximum time offset and a maximum frequency offset that can be tolerated in a current communication form. The current communication form includes a carrier frequency band and a subcarrier spacing that are currently used. The maximum time offset and the maximum frequency offset are related to the carrier frequency band and the subcarrier spacing that are currently used. For example, the first threshold may be 30 m, and the second threshold may be 0.5 m/s (m per second).

Optionally, the error of the position of the first satellite at the second moment is determined based on at least one of a cross-track position error, an along-track position error, and a radial position error of the first satellite at the second moment. The error of the velocity of the first satellite at the second moment is determined based on at least one of a cross-track velocity error, an along-track velocity error, and a radial velocity error of the first satellite at the second moment.

For example, the terminal device determines the cross-track position error (along-track error) by using an actual cross-track position of the first satellite at the second moment and a cross-track position obtained through calculation in step 302. The terminal device determines the along-track position error (cross-track error) by using an actual along-track position of the first satellite at the second moment and an along-track position obtained through calculation in step 302. The terminal device determines the radial position error (radial error) by using an actual radial position of the first satellite at the second moment and a radial position obtained through calculation in step 302. Then, the terminal device finally determines the error of the position of the first satellite at the second moment with reference to the cross-track position error, the along-track position error, and the radial position error. The terminal device determines the cross-track velocity error by using an actual cross-track velocity of the first satellite at the second moment and a cross-track velocity obtained through calculation in step 302. The terminal device determines the along-track velocity error by using an actual along-track velocity of the first satellite at the second moment and an along-track velocity obtained through calculation in step 302. The terminal device determines the radial velocity error by using an actual radial velocity of the first satellite at the second moment and a radial velocity obtained through calculation in step 302. Then, the terminal device finally determines the error of the velocity of the first satellite at the second moment with reference to the cross-track velocity error, the along-track velocity error, and the radial velocity error.

It can be learned that, in the technical solution of this application, the error of the position of the first satellite at the second moment is determined by using position information in a plurality of dimensions. This helps improve accuracy of determining the error of the position of the first satellite, to ensure a precision requirement of the position of the first satellite. The error of the velocity of the first satellite at the second moment is determined by using velocity information in a plurality of dimensions. This helps improve accuracy of determining the error of the velocity of the first satellite, to ensure a precision requirement of the velocity of the first satellite.

An ephemeris prediction result should cover a worst case, to ensure time-frequency synchronization between the terminal device and the network device. The terminal device may cyclically perform the method in step 301 to step 303 for a plurality of times, to ensure that a time-frequency synchronization requirement between the terminal device and the network device can be met when the first satellite uses the first time interval as a time interval for updating the ephemeris parameter of the first satellite and uses the bit quantity corresponding to the first indication information to indicate the ephemeris parameter. For example, the first satellite is a low-earth orbit satellite, and a bit quantity corresponding to an orbit parameter of the first satellite in each dimension is shown in Table 4.

**Table 4**

|  | Semimajor axis a | Eccentricity e | Argument of perigee ω | Right ascension of the ascending node Ω | Inclination i | Mean anomaly M$_0$ |
|---|---|---|---|---|---|---|
| Bit allocation (Bit allocation) | $m_1^j = 19$ | $m_2^j = 13$ | $m_3^j = 24$ | $m_4^j = 20$ | $m_5^j = 20$ | $m_6^j = 22$ |
| Value range | [6675 km, 7875 km] | [0, 0.015] | [0, $2\pi$] | [-180°, +180°] | [-90°, +90°] | [0, $2\pi$] |

Based on the design in Table 4, when the time intervals are 10s, 20, 30s, 60s, and 120s, the method similar to step 301 to step 303 is separately performed 1000 times, to obtain maximum position error values and maximum velocity error values. Details are shown in Table 5.

**Table 5**

| Time interval Period Unit: second (s) | Position error (Position error) Unit: meter (m) | Velocity error (Velocity error) Unit: meter per second m/s |
|---|---|---|
| 10 | 22.7334043 | 0.133947489 |
| 20 | 22.79223844 | 0.132619689 |
| 30 | 22.92614189 | 0.131259183 |
| 60 | 24.41674516 | 0.12700382 |
| 120 | 30.81204222 | 0.124254059 |

It can be learned from Table 5 that, when the time interval is 60s, the maximum position error value is less than 30 meters. A current working assumption provides a time interval of more than 30 meters. Therefore, bit overheads in a unit of time are less than 2 bit/s. Therefore, according to the technical solution of this application, signaling overheads can be greatly reduced when a time-frequency synchronization requirement is met.

It can be learned that in the technical solution of this application, an indication method for an ephemeris parameter is determined by evaluating indication overheads of the ephemeris parameter in a unit of time. The bit quantity corresponding to the first indication information, the quantity of bits that indicate the orbit parameter in each dimension, and a size of the first time interval are determined by using a target that the ratio of the bit quantity corresponding to the first indication information or the bit quantity corresponding to the second indication information to the first time interval is less than the third threshold. Therefore, bit overheads that indicate an ephemeris parameter in the communication system are reduced.

The following describes another description manner of step 303.

If the error of the position of the first satellite at the second moment is greater than the first threshold, or the error of the velocity of the first satellite at the second moment is greater than the second threshold, the terminal device determines a position and a velocity of the first satellite at a fourth moment. The fourth moment is before the second moment, and the fourth moment is after the first moment. If an error of the position of the first satellite at the fourth moment is less than the first threshold and an error of the velocity of the first satellite at the fourth moment is less than the second threshold, the terminal device determines a time interval between the first moment and the fourth moment and the bit quantity corresponding to the first indication information.

Step 301 to step 303 may be understood as a process in which the terminal device performs the method once. The terminal device may perform the method M times, where M is an integer greater than or equal to 1.

In a possible implementation, when the terminal device performs the method M times, indication information used by the terminal device to perform the method each time corresponds to a different bit quantity, and/or a different time interval is used by the terminal device to perform the method each time.

In this implementation, optionally, the embodiment shown in FIG. 3 further includes step 304. Step 304 may be performed after the terminal device performs the method in step 301 to step 303 M times.

304: After the terminal device performs the method M times, the terminal device outputs a bit quantity corresponding to third indication information and a second time interval.

The bit quantity corresponding to the third indication information and the second time interval are used by the first satellite to update the ephemeris parameter. The bit quantity corresponding to the third indication information is a bit quantity corresponding to indication information used by the terminal device to perform the method for the $X^{th}$ time. The second time interval is a time interval used by the terminal device to perform the method for the $X^{th}$ time. A ratio of the bit quantity of the indication information used by the terminal device to perform the method for the $X^{th}$ time to the time interval used by the terminal device to perform the method for the $X^{th}$ time is minimum, and X is an integer greater than or equal to 1 and less than or equal to M. That is, the bit quantity corresponding to the indication information used by the terminal device to perform the method for the $X^{th}$ time is used as a bit quantity corresponding to indication information used by the terminal device to update the ephemeris parameter of the first satellite, and the time interval used to perform the method for the $X^{th}$ time is used as a time interval for updating the ephemeris parameter of the first satellite.

For example, M is equal to 1000. Optionally, the bit quantity corresponding to the third indication information includes a bit quantity corresponding to the orbit parameter of the first satellite in each dimension.

In this implementation, if the ephemeris parameter of the first satellite includes orbit parameters in a plurality of dimensions, the bit quantity corresponding to the third indication information includes a quantity of bits that indicate an orbit parameter in each dimension in the orbit parameters in the plurality of dimensions.

In other words, the terminal device performs the foregoing method M times to find a time interval for updating the ephemeris parameter of the first satellite, and a bit quantity corresponding to indication information that indicates the ephemeris parameter. In this way, bit overheads generated when the first satellite updates the ephemeris parameter are reduced, to reduce indication overheads of the communication system in a unit of time, and improve communication efficiency.

It should be noted that, optionally, the terminal device may determine an interval corresponding to the orbit parameter in each dimension based on a maximum value and a minimum value that correspond to the orbit parameter in each dimension and that are set in the communication system, and a physical characteristic or empirical data of the orbit parameter in each dimension.

Specifically, the orbit parameter in each dimension in the communication system has a corresponding maximum value and a corresponding minimum value. For example, a maximum value of the $i^{th}$-dimensional orbit parameter of a satellite is max $\theta_i$, and a minimum value of the $i^{th}$-dimensional orbit parameter of the satellite is min $\theta_i$. Considering influence of atmospheric friction, solar pressure, solar gravity, lunar gravity, and unevenness of the earth gravity, the satellite will be disturbed during operation. Therefore, an upper limit value of an interval corresponding to the orbit parameter in each dimension indicated by the satellite ephemeris should be increased and a lower limit value of the interval should be decreased based on a potential impact caused by the disturbance. For example, an interval corresponding to the $i^{th}$-dimensional orbit parameter in the communication system may be defined as [min $\theta_i$ - $\delta_i$, max $\theta_i$ - $\delta_i$]. $\delta_i$ is determined by the terminal device based on the physical characteristic or the empirical data of the orbit parameter in each dimension.

For example, with reference to Table 6, the following describes maximum values and minimum values corresponding to orbit parameters in the dimensions that are set on the satellite in the communication system.

**Table 6**

| | Semimaj or axis a | Eccentricity e | Argument of perigee $\omega$ | Right ascension of the ascending node $\Omega$ | Inclination i | Mean anomaly $M_0$ |
|---|---|---|---|---|---|---|
| Maximum value | 918 | 0.005 | $2\pi$ | 180° | 50° | $2\pi$ |
| Minimum value | 828 | 0 | 0 | -180° | -50° | 0 |

The terminal device may determine an interval corresponding to the orbit parameter in each dimension based on Table 6 and the physical characteristics or the empirical data of the orbit parameter in each dimension. The intervals are specifically represented by Table 7.

**Table 7**

| | Semimaj or axis a | Eccentricity e | Argument of perigee $\omega$ | Right ascension of the ascending node $\Omega$ | Inclination i | Mean anomaly $M_0$ |
|---|---|---|---|---|---|---|
| Maximum value | 920 | 0.010 | $2\pi$ | 180° | 52° | $2\pi$ |
| Minimum value | 826 | 0 | 0 | -180° | -52° | 0 |

The terminal device determines the interval corresponding to the orbit parameter in each dimension with reference to the physical characteristic or the empirical data of the orbit parameter in each dimension. This helps the satellite effectively indicate the orbit parameter of the satellite, and ensures a time-frequency synchronization requirement between the terminal device and the network device, to improve communication efficiency.

In a possible implementation, the terminal device may determine, based on a type of a satellite, a time interval that is used to update an ephemeris parameter and that corresponds to each type of satellite and a bit quantity corresponding to indication information that indicates an ephemeris parameter. A process of determining the time interval corresponding to each type of satellite and the bit quantity corresponding to the indication information is similar to that in the embodiment shown in FIG. 3.

If a second satellite of a same type as the first satellite exists in the communication system, a process in which the terminal device determines a time interval corresponding to the second satellite and a bit quantity corresponding to indication information is similar to the process shown in FIG. 3. Then, the terminal device selects a maximum time interval and a maximum bit quantity from the time intervals corresponding to the first satellite and the second satellite and the bit quantities corresponding to the indication information. The terminal device uses the maximum time interval as a time interval for updating the ephemeris parameter of the type of satellite, and uses the maximum bit quantity as a bit quantity used by the type of satellite to indicate the ephemeris parameter.

The following describes a process in which the terminal device determines a time interval that corresponds to each type of satellite and that is used to update an ephemeris parameter, and a bit quantity corresponding to indication information that indicates the ephemeris parameter. In the following process, the bit quantity corresponding to the indication information is ensured by using indication overheads and a bit allocation format.

Step 1: A terminal device determines value ranges of orbit parameters corresponding to different satellites in each dimension.

Step 2: The terminal device selects the $j^{th}$ satellite in $a^{th}$ type of satellites. The $a^{th}$ type of satellites represent low-earth orbit satellites, $b^{th}$ type of satellites represent medium-earth orbit satellites, and $c^{th}$ type of satellites represent geostationary-earth orbit satellites.

The following describes, with reference to step 2.1 to step 2.4, a process of determining a time interval, indication overheads, and a bit allocation format corresponding to the $j^{th}$ satellite.

Step 2.1: For the $j^{th}$ satellite, initialize a search parameter $m_i^j$, where $m_i^j$ is a random integer that is not greater than a corresponding value in a current working assumption, to obtain a group of parameters $\{ m_1^j, m_2^j, m_3^j, m_4^j, m_5^j, m_6^j \}$. $m_1^j$ is less than or equal to 33.

It should be noted that, when a group of parameters are initialized, a bit quantity corresponding to an orbit parameter in each dimension may be determined with reference to a type of the j$^{th}$ satellite. Therefore, a group of parameters that have low overheads and can ensure a corresponding precision requirement can be found. For a type of a satellite and a proportion of an orbit parameter in each dimension in indication information, refer to the foregoing related descriptions.

Step 2.2: Evaluate orbit prediction performance under the group of parameters.

The following describes step 2.2 with reference to step 2.21 to step 2.23.

Step 2.21: Gradually increase a calculation time interval of the terminal device. For example, $\Delta T$ falls within an interval [0, 200].

Step 2.22: The terminal device performs a process when the calculation time interval is $\Delta T_k$.

The following describes, with reference to step 2.221 to step 2.223, a process performed by the terminal device when the calculation time interval is $\Delta T_k$.

Step 2.221: The terminal device randomly selects the e$^{th}$ moment as a start moment T0.

In step 2.221, the terminal device determines the start moment T0 of calculation.

Step 2.222: The terminal device obtains a position and a velocity of the first satellite at a moment T0+$\Delta T_k$ through calculation based on the start moment TO.

If an error of the position of the first satellite at the moment T0+$\Delta T_k$ is greater than the first threshold, or an error of the velocity of the first satellite at the moment T0+$\Delta T_k$ is greater than the second threshold, a cycle of a process performed by the terminal device when the calculation time interval is $\Delta T_k$ ends. If the error of the position of the first satellite at the moment T0+$\Delta T_k$ is less than the first threshold and the error of the velocity of the first satellite at the moment T0+$\Delta T_k$ is less than the second threshold, the terminal device performs a cyclic test by using the group of parameters and the calculation time interval $\Delta T_k$ as a bit allocation format and a calculation time interval corresponding to the first satellite. The cyclic test is to test, by using the group of parameters and the calculation time interval $\Delta T_k$ as the bit allocation format and the calculation time interval corresponding to the first satellite, whether a precision requirement of the terminal device for a position and a velocity of the first satellite can be met. Each time the cyclic test is successfully performed, a cyclic test counter increases by 1.

Step 2.223: If a final count of a cyclic tester is greater than a threshold of a quantity of random independent experiments, the terminal device may determine that a current maximum calculation time interval is $\Delta T_k$, and the terminal device returns to 2.21 to select a larger calculation time interval until a quantity of cyclic tests corresponding to the newly selected calculation time interval cannot be greater than the threshold of the quantity of random independent experiments. For example, if the quantity of cyclic tests corresponding to the newly selected calculation time interval $\Delta T_{k+1}$ cannot be greater than the threshold of the quantity of random independent experiments, the terminal device may determine that the maximum calculation time interval is $\Delta T_k$.

Step 2.23: The terminal device determines, based on the process of step 2.1 to step 2.223, that a maximum calculation time interval corresponding to the group of parameters is $\Delta T_k$ and bit overheads in a unit of time are

$$C_U = \frac{\sum_{i=1}^{6} m_i^j}{\Delta T_k}$$

. If $C_U$ is less than the third threshold, step 2.3 is performed. If $C_U$ is greater than the third threshold, step 2.1 is performed.

Step 2.3: If the cyclic process of step 2.1 to step 2.2 is the first cycle, $C_{best}^{type} = C_U$,

$$M_{best}^{type} = m^j = \begin{bmatrix} m_1^j \\ m_2^j \\ m_3^j \\ m_4^j \\ m_5^j \\ m_6^j \end{bmatrix}$$

, and $\Delta T^{Type} = \Delta T_k$. If the process of step 2.1 to step 2.2 is not the first cycle, when $C_U$ is less than $C_{best}^{type}$, $C_{best}^{type}$ is updated to be equal to $C_U$, $M_{best}^{type}$ is updated to be equal to $m^j$, and $\Delta T^{Type} = \Delta T_k$. $C_{best}^{type}$ indicates the minimum bit overheads corresponding to the a$^{th}$ type of satellite. $M_{best}^{type}$ indicates a bit allocation format corresponding to the orbit parameter of the first satellite in each dimension.

Step 2.4: If a quantity of performing times corresponding to step 2.1 to step 2.3 is less than a preset quantity of times of selecting parameters, return to step 2.1. If the quantity of performing times corresponding to step 201 to step 2.3 is greater than the preset quantity of times of selecting parameters, step 2.5 is performed.

Step 2.5: If a quantity of performing times corresponding to step 2 to step 2.4 is greater than a preset quantity (for example, 1000) of selecting of the a$^{th}$ type of satellite, or $C_{best}^{type}$ obtained in step 2 to step 2.4 is less than a threshold, end the cyclic process of step 2 to step 2.4. In this case, the terminal device may obtain $M_{best}^{type}$, $C_{best}^{type}$, and $\Delta T^{Type}$ corresponding to the a$^{th}$ type of satellite. Then, the terminal device returns to step 2 to determine $M_{best}^{type}$, $C_{best}^{type}$, and $\Delta T^{Type}$ corresponding to a next type of satellite (for example, the b$^{th}$ type of satellite).

Step 3: The terminal device outputs a bit allocation format $M_{best}^{type}$, bit overheads $C_{best}^{type}$, and a maximum calculation time interval $\Delta T^{Type}$ corresponding to each type of satellite.

For example, the j$^{th}$ satellite is a low-earth orbit satellite. Table 8 below shows $M_{best}^{type}$, $C_{best}^{type}$, and $\Delta T^{Type}$ corresponding to the low-earth orbit satellite.

**Table 8**

| | Semimajor axis a | Eccentricity e | Argument of perigee ω | Right ascension of the ascending node Ω | Inclination i | Mean anomaly $M_0$ | $\Delta T^{Type}$ | $C_{best}^{type}$ |
|---|---|---|---|---|---|---|---|---|
| Bit allocation (Bit allocation) | $m_1^j = 19$ | $m_2^j = 13$ | $m_3^j = 24$ | $m_4^j = 20$ | | $m_6^j = 22$ $m_6^j = 22$ | 60s | 2 bit/s |
| Value range | [6678 km, 7875 km] | [0, 0.015] | [0, $2\pi$] | [-180°, +180°] | [-90°, +90°] | [0, $2\pi$] | | |

EP 4 421 533 A1

An ephemeris prediction result should cover a worst case, to ensure time-frequency synchronization between the terminal device and the network device. For example, the first satellite is a low-earth orbit satellite, and a bit quantity corresponding to an orbit parameter of the first satellite in each dimension is shown in Table 8. Based on the design in Table 8, in the foregoing cycle process, 1000 cycle tests are separately performed when the calculation time interval is 10s, 20, 30s, 60s, 120s, 600s, and 1800s, to obtain a maximum value of a radial position error, a maximum value of an absolute position error, a maximum value of a radial velocity error, and a maximum value of an absolute velocity error corresponding to each calculation time interval. Details are shown in Table 9.

**Table 9**

| Calculation time interval Unit: (s) | Radial position (Radical position error) Unit: meter (m) | Radial velocity (Radical velocity error) Unit: m/s | Absolute position (Absolute position error) Unit: m | Absolute velocity (Absolute velocity error) Unit: m/s |
|---|---|---|---|---|
| 10 | 0.443981923 | 0.015047499 | 47.48130765 | 0.057120496 |
| 20 | 0.554554899 | 0.015189313 | 47.44618543 | 0.057237027 |
| 30 | 0.696885048 | 0.015402376 | 47.41201369 | 0.057386642 |
| 60 | 1.186574215 | 0.016325132 | 47.31858927 | 0.057982043 |
| 120 | 2.266811506 | 0.019090652 | 47.20821553 | 0.059656084 |
| 600 | 17.07138466 | 0.043491481 | 52.23780914 | 0.081328917 |
| 1800 | 74.93454806 | 0.043522924 | 149.945438 | 0.181635568 |

It can be learned from Table 9 that the position error is represented by a maximum value of a radial position error and a maximum value of an absolute position error. A velocity error is represented by a maximum value of a radial velocity error and a maximum value of an absolute velocity error.

It can be learned from Table 9 that, when the time interval is 120s, a maximum position error value is less than 48 meters. A current working assumption provides a calculation time interval of more than 50 meters. Therefore, bit overheads in a unit of time are less than 1 bit/s. Therefore, according to the technical solution of this application, signaling overheads can be greatly reduced when a time-frequency synchronization requirement is met.

A time interval and a bit allocation format corresponding to each type of satellite are determined by using the technical solution of this application, so that bit overheads in the unit of time are less than the third threshold. Each type of satellite may update an ephemeris parameter based on a corresponding periodicity. The periodicity is longer than a time interval corresponding to the type of satellite. For the terminal device, the terminal device may receive, based on the periodicity, an updated ephemeris parameter of the type of satellite, and determine a position and a velocity of the type of satellite, to meet a requirement of the communication system for time-frequency synchronization between the terminal device and a network side. Alternatively, when the terminal device needs to receive the updated ephemeris parameter of the type of satellite, the terminal device receives the ephemeris parameter of the type of satellite at a corresponding moment.

It should be noted that, because different terminal devices have different calculation capabilities, a calculation time interval corresponding to a terminal device having a strong calculation capability may be set to a large value. A calculation time interval corresponding to a terminal device with a weak calculation capability may be set to a small value.

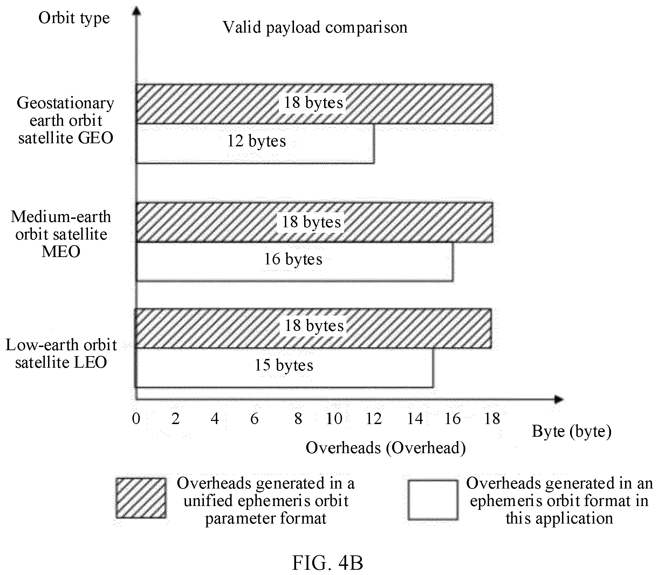

Refer to FIG. 4B. FIG. 4B shows payloads separately saved by using ephemeris orbit parameter formats corresponding to various types of satellites provided in this application. The ephemeris orbit parameter format may be understood as bit allocation or a bit quantity corresponding to the orbit parameter in each dimension. As shown in FIG. 4B, for a low-earth orbit satellite, compared with a solution of using a unified ephemeris orbit parameter format (18 bytes), a solution of using the ephemeris orbit parameter format (15 bytes) provided in this application can save 3 bytes. For a medium-earth orbit satellite, compared with a solution of using a unified ephemeris orbit parameter format (18 bytes), a solution of using the ephemeris orbit parameter format (16 bytes) provided in this application can save 2 bytes. For a geostationary earth orbit satellite, compared with a solution of using a unified ephemeris orbit parameter format (18 bytes), a solution of using the ephemeris orbit parameter format (12 bytes) provided in this application can save 6 bytes. Most of future satellite types are low-earth orbit satellites, and a few of the future satellite types are medium-earth orbit satellites. Therefore, using the three corresponding ephemeris orbit parameter formats can save huge satellite ephemeris signaling overheads at a system level.

In another possible implementation, the terminal device determines, based on the process shown in FIG. 3, a time interval that corresponds to each satellite in the communication system and that is used to update an ephemeris parameter and a bit quantity corresponding to indication information that indicates an ephemeris parameter. Then, the terminal device selects a maximum time interval and a maximum bit quantity from time intervals corresponding to a plurality of satellites and bit quantities corresponding to indication information. The terminal device uses the maximum time interval as a time interval for updating an ephemeris parameter by each satellite in the communication system, and uses the maximum bit quantity as a bit quantity used by each satellite in the communication system to indicate an ephemeris parameter.

In this implementation, the terminal device determines a time interval that corresponds to a satellite in the communication system and that is used to update an ephemeris parameter and a bit quantity corresponding to indication information that indicates an ephemeris parameter. A determining process of the terminal device is similar to the foregoing process in which the terminal device determines, for each type of satellite, the time interval for updating the ephemeris parameter and the bit quantity corresponding to the indication information that indicates the ephemeris parameter. A difference lies in that in step 2, the $j^{th}$ satellite in the communication system is directly selected without distinguishing a satellite type. In step 2.5, the time interval, the bit overheads, and the bit allocation format corresponding to each satellite in the communication system may be directly obtained.

In this embodiment of this application, the terminal device obtains the first indication information. The first indication information indicates the ephemeris parameter of the first satellite at the first moment. Then, the terminal device determines the position and the velocity of the first satellite at the second moment based on the ephemeris parameter of the first satellite at the first moment. The second moment is after the first moment. If the error of the position of the first satellite at the second moment is less than the first threshold and the error of the velocity of the first satellite at the second moment is less than the second threshold, the terminal device obtains the second indication information. The second indication information indicates the ephemeris parameter of the first satellite at the third moment, the third moment is before the second moment, the ratio of the bit quantity corresponding to the first indication information or the bit quantity corresponding to the second indication information to the first time interval is less than the third threshold, and the first time interval is a time interval between the first moment and the third moment. It can be learned that, in the technical solution of this application, if the error of the position of the first satellite at the second moment is less than the first threshold and the error of the velocity of the first satellite at the second moment is less than the second threshold, the terminal device obtains the second indication information. The ratio of the bit quantity corresponding to the first indication information or the bit quantity corresponding to the second indication information to the first time interval is less than the third threshold. When a precision requirement of the terminal device for the position and the velocity of the first satellite is met, indication overheads of the ephemeris parameter of the first satellite in a unit of time are less than the third threshold, so that bit overheads that indicate an ephemeris parameter of a satellite in the unit of time in the communication system are reduced, and communication performance is improved.

FIG. 5 is a schematic diagram of another embodiment of a communication method according to an embodiment of this application. Refer to FIG. 5. The communication method includes the following steps.

501: A first network device sends first indication information to a terminal device. Correspondingly, the terminal device receives the first indication information from the first network device.

For the first indication information, refer to related descriptions of step 301 in the embodiment shown in FIG. 3. Details are not described herein again.

Optionally, the embodiment shown in FIG. 5 further includes step 501a and step 501b. Step 501a and step 501b may be performed before step 501.

501a: The first network device determines a weight of an orbit parameter of the first satellite in each dimension at a first moment based on a type of the first satellite.

501b: The first network device generates the first indication information based on the weight of the orbit parameter of the first satellite in each dimension at the first moment.

Specifically, the first network device may design the weight of the orbit parameter in each dimension with reference to the type of the first satellite. Then, the first network device generates the first indication information based on the weight of the orbit parameter in each dimension. This helps to find more quickly and effectively a bit quantity corresponding to the orbit parameter in each dimension that has low overheads and can ensure a time-frequency synchronization requirement between the terminal device and the first network device. For the type of the satellite and the proportion of the orbit parameter in each dimension in the indication information, refer to related descriptions in the embodiment shown in FIG. 3.

502: The terminal device determines a position and a velocity of the first satellite at a second moment based on the ephemeris parameter of the first satellite at the first moment.

503: If an error of the position of the first satellite at the second moment is less than a first threshold and an error of the velocity of the first satellite at the second moment is less than a second threshold, the terminal device receives second indication information from the first network device.

Step 502 and step 503 are similar to step 302 and step 303 in the embodiment shown in FIG. 3. For details, refer to related descriptions of step 302 and step 303 in the embodiment shown in FIG. 3.

Optionally, the embodiment shown in FIG. 5 further includes step 503a, and step 503a may be performed before step 503.

503a: The first network device sends an actual position and an actual velocity of the first satellite at the second moment to the terminal device. Correspondingly, the terminal device receives the actual position and the actual velocity of the first satellite at the second moment from the first network device.

In step 503a, the first network device may deliver the actual position and the actual velocity of the first satellite at the second moment, so that the terminal device determines the error of the position of the first satellite at the second moment and the error of the velocity of the first satellite at the second moment. Therefore, the process of step 501 to step 503 is performed cyclically to obtain the bit quantity corresponding to the orbit parameter in each dimension and the first time interval when the bit overheads in the unit of time are less than the third threshold.

504: After the terminal device performs the method M times, the terminal device outputs a bit quantity corresponding to third indication information and a second time interval.

Step 504 is similar to step 304 in the embodiment shown in FIG. 3. For details, refer to the foregoing related descriptions. Details are not described herein again.

A communication apparatus provided in embodiments of this application is described above. FIG. 6 is a schematic diagram of a structure of a communication apparatus according to an embodiment of this application. The communication apparatus may be configured to perform the steps performed by the terminal device in the embodiments shown in FIG. 3 and FIG. 5. For details, refer to related descriptions in the foregoing method embodiments.

The communication apparatus includes a transceiver module 601 and a processing module 602.

The transceiver module 601 is configured to obtain first indication information, where the first indication information indicates an ephemeris parameter of a first satellite at a first moment.

The processing module 602 is configured to determine a position and a velocity of the first satellite at a second moment based on the ephemeris parameter of the first satellite at the first moment, where the second moment is after the first moment.

The transceiver module 601 is further configured to: if an error of the position of the first satellite at a second moment is less than a first threshold, and an error of a velocity of the first satellite at the second moment is less than a second threshold, obtain second indication information, where the second indication information indicates an ephemeris parameter of the first satellite at a third moment, the third moment is before the second moment, a ratio of a bit quantity corresponding to the first indication information or a bit quantity corresponding to the second indication information to a first time interval is less than a third threshold, and the first time interval is a time interval between the first moment and the third moment.

In a possible implementation, the ephemeris parameter of the first satellite at the first moment includes at least one of the following: a semimajor axis, an eccentricity, an inclination, a right ascension of an ascending node, an argument of perigee, a mean anomaly, a true anomaly, an argument of latitude, and an orbit type identifier of the first satellite.

In another possible implementation, the ephemeris parameter of the first satellite at the first moment includes orbit parameters of the first device in a plurality of dimensions at the first moment.

A quantity of bits that indicate an orbit parameter of the first satellite in each dimension at the first moment in the first indication information is related to a weight of the orbit parameter in the dimension, and the weight of the orbit parameter in each dimension is determined based on a type of the first satellite.

In another possible implementation, the first satellite is in a low-earth orbit position. A quantity of bits that indicate the semimajor axis of the first satellite in the first indication information is 19 bits, and a value of the semimajor axis falls within an interval [6675 km, 7875 km].

A quantity of bits that indicate the eccentricity of the first satellite in the first indication information is 13 bits, and a value of the eccentricity falls within an interval [0, 0.015].

A quantity of bits that indicate the argument of perigee of the first satellite in the first indication information is 22 bits, and a value of the argument of perigee of the first satellite falls within an interval [0, $2\pi$].

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 22 bits, and a value of the mean anomaly of the first satellite falls within an interval [0, $2\pi$],

A quantity of bits that indicate the orbit type identifier of the first satellite in the first indication information is 2 bits, and the bits that indicate the orbit type identifier of the first satellite in the first indication information indicate that an orbit type of the first satellite is a low-earth orbit.

In another possible implementation, the first satellite is a medium-earth orbit satellite. A quantity of bits that indicate the semimajor axis of the first satellite in the first indication information is 23 bits, and a value of the semimajor axis falls within an interval [13378 km, 31378 km].

A quantity of bits that indicate the eccentricity of the first satellite in the first indication information is 13 bits, and a value of the eccentricity falls within an interval [0, 0.015].

A quantity of bits that indicate the argument of perigee of the first satellite in the first indication information is 22 bits, and a value of the argument of perigee of the first satellite falls within an interval $[0, 2\pi]$.

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 22 bits, and a value of the mean anomaly of the first satellite falls within an interval $[0, 2\pi]$.

A quantity of bits that indicate the orbit type identifier of the first satellite in the first indication information is 2 bits, and the bits that indicate the orbit type identifier of the first satellite in the first indication information indicate that an orbit type of the first satellite is a medium-earth orbit.

In another possible implementation, the first satellite is a geostationary earth orbit satellite. A quantity of bits that indicate the semimajor axis of the first satellite in the first indication information is 10 bits, and a value of the semimajor axis falls within an interval [42163 km, 42165 km].

A quantity of bits that indicate the eccentricity of the first satellite in the first indication information is 9 bits, and a value of the eccentricity falls within an interval [0, 0.0005].

A quantity of bits that indicate the argument of perigee of the first satellite in the first indication information is 22 bits, and a value of the argument of perigee of the first satellite falls within an interval $[0, 2\pi]$.

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 7 bits, and a value of the inclination of the first satellite falls within an interval [-0.01°, +0.01°].

A quantity of bits that indicate the mean anomaly of the first satellite in the first indication information is 22 bits, and a value of the mean anomaly of the first satellite falls within an interval $[0, 2\pi]$.

A quantity of bits that indicate the orbit type identifier of the first satellite in the first indication information is 2 bits, and the bits that indicate the orbit type identifier of the first satellite in the first indication information indicate that an orbit type of the first satellite is a geostationary earth orbit.

In another possible implementation, a quantity of bits that indicate the semimajor axis of the first satellite in the first indication information is 33 bits, and a value of the semimajor axis falls within an interval [6500 km, 43000 km].

A quantity of bits that indicate the eccentricity of the first satellite in the first indication information is 19, and a value of the eccentricity falls within an interval [0, 0.015].

A quantity of bits that indicate the argument of perigee of the first satellite in the first indication information is 24 bits, and a value of the argument of perigee of the first satellite falls within an interval $[0, 2\pi]$.

A quantity of bits that indicate the right ascension of the ascending node of the first satellite in the first indication information is 21 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 24 bits, and a value of the mean anomaly of the first satellite falls within an interval $[0, 2\pi]$.

In another possible implementation, the error of the position of the first satellite at the second moment is determined based on at least one of a cross-track position error, an along-track position error, and a radial position error of the first satellite at the second moment.

In another possible implementation, the error of the velocity of the first satellite at the second moment is determined based on at least one of a cross-track velocity error, an along-track velocity error, and a radial velocity error of the first satellite at the second moment.

In another possible implementation, the first indication information is carried in a SIB, the first indication information indicates one or more RRC parameters, and the one or more RRC parameters include the ephemeris parameter of the first satellite at the first moment.

In another possible implementation, the transceiver module 601 is specifically configured to:

receive the first indication information from a first network device; and

receive the second indication information from the first network device.

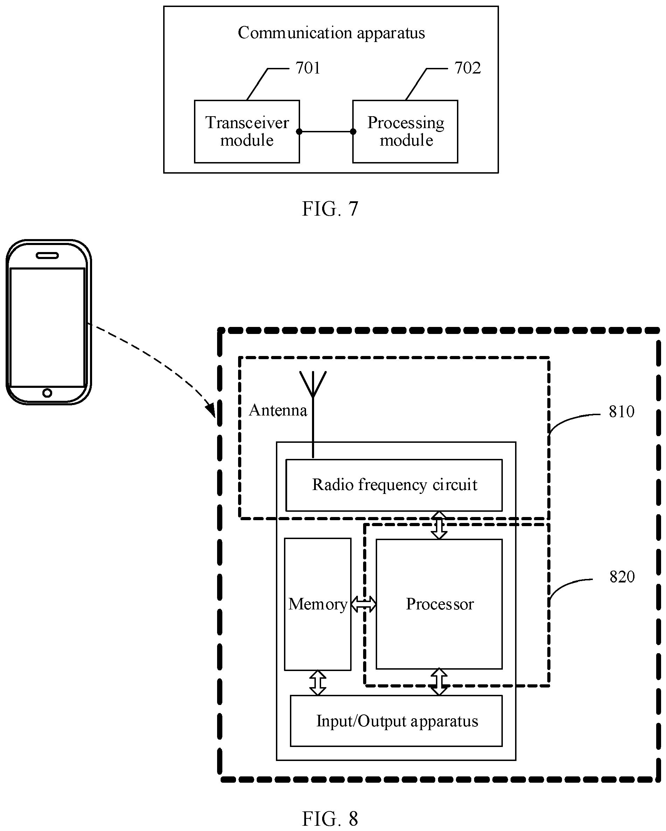

A communication apparatus provided in embodiments of this application is described above. FIG. 7 is a schematic diagram of a structure of a communication apparatus according to an embodiment of this application. The communication apparatus may be configured to perform the steps performed by the first network device in the embodiment shown in FIG. 5. For details, refer to related descriptions in the foregoing method embodiment.

The communication apparatus includes a transceiver module 701 and a processing module 702.

The processing module 702 is configured to determine an ephemeris parameter of a first satellite at a first moment.

The transceiver module 701 is configured to send first indication information, where the first indication information indicates the ephemeris parameter of the first satellite at the first moment.

The processing module 702 is further configured to determine an ephemeris parameter of a first satellite at a second moment.

The transceiver module 701 is further configured to send second indication information.

The second indication information indicates an ephemeris parameter of the first satellite at a third moment, the third moment is after the first moment, a ratio of a bit quantity corresponding to the first indication information or a bit quantity corresponding to the second indication information to a first time interval is less than a third threshold, and the first time interval is a time interval between the first moment and the third moment.

In another possible implementation, the ephemeris parameter of the first satellite at the first moment includes at least one of the following: a semimajor axis, an eccentricity, an inclination, a right ascension of an ascending node, an argument of perigee, a mean anomaly, a true anomaly, an argument of latitude, and an orbit type of the first satellite.

In another possible implementation, the ephemeris parameter of the first satellite at the first moment includes orbit parameters of the first satellite in a plurality of dimensions at the first moment.

The processing module 702 is further configured to:

determine a weight of an orbit parameter in each dimension in the orbit parameters in the plurality of dimensions based on a type of the first satellite; and determine, based on the weight of the orbit parameter in each dimension, a quantity of bits that indicate the orbit parameter in each dimension in the first indication information.

In another possible implementation, the first satellite is in a low-earth orbit position. A quantity of bits that indicate the semimajor axis of the first satellite in the first indication information is 19 bits, and a value of the semimajor axis falls within an interval [6675 km, 7875 km].

A quantity of bits that indicate the eccentricity of the first satellite in the first indication information is 13 bits, and a value of the eccentricity falls within an interval [0, 0.015].

A quantity of bits that indicate the argument of perigee of the first satellite in the first indication information is 22 bits, and a value of the argument of perigee of the first satellite falls within an interval [0, $2\pi$].

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 22 bits, and a value of the mean anomaly of the first satellite falls within an interval [0, $2\pi$].

A quantity of bits that indicate the orbit type identifier of the first satellite in the first indication information is 2 bits, and the bits that indicate the orbit type identifier of the first satellite in the first indication information indicate that an orbit type of the first satellite is a low-earth orbit.

In another possible implementation, the first satellite is a medium-earth orbit satellite. A quantity of bits that indicate the semimajor axis of the first satellite in the first indication information is 23 bits, and a value of the semimajor axis falls within an interval [13378 km, 31378 km].

A quantity of bits that indicate the eccentricity of the first satellite in the first indication information is 13 bits, and a value of the eccentricity falls within an interval [0, 0.015].

A quantity of bits that indicate the argument of perigee of the first satellite in the first indication information is 22 bits, and a value of the argument of perigee of the first satellite falls within an interval [0, $2\pi$].

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 22 bits, and a value of the mean anomaly of the first satellite falls within an interval [0, $2\pi$].

A quantity of bits that indicate the orbit type identifier of the first satellite in the first indication information is 2 bits, and the bits that indicate the orbit type identifier of the first satellite in the first indication information indicate that an orbit type of the first satellite is a medium-earth orbit.

In another possible implementation, the first satellite is a geostationary earth orbit satellite. A quantity of bits that indicate the semimajor axis of the first satellite in the first indication information is 10 bits, and a value of the semimajor axis falls within an interval [42163 km, 42165 km].

A quantity of bits that indicate the eccentricity of the first satellite in the first indication information is 9 bits, and a value of the eccentricity falls within an interval [0, 0.0005].

A quantity of bits that indicate the argument of perigee of the first satellite in the first indication information is 22 bits, and a value of the argument of perigee of the first satellite falls within an interval [0, $2\pi$].

A quantity of bits that indicate the right ascension of the ascending node of the first satellite in the first indication information is 20 bits, and a value of the right ascension of the ascending node of the first satellite falls within an interval [-180°, +180°].

A quantity of bits that indicate the inclination of the first satellite in the first indication information is 7 bits, and a value of the inclination of the first satellite falls within an interval [-0.01°, +0.01°].

A quantity of bits that indicate the mean anomaly of the first satellite in the first indication information is 22 bits, and a value of the mean anomaly of the first satellite falls within an interval [0, $2\pi$].

A quantity of bits that indicate the orbit type identifier of the first satellite in the first indication information is 2 bits, and the bits that indicate the orbit type identifier of the first satellite in the first indication information indicate that an orbit type of the first satellite is a geostationary earth orbit.

In another possible implementation, a quantity of bits that indicate the semimajor axis of the first satellite in the first indication information is 33 bits, and a value of the semimajor axis falls within an interval [6500 km, 43000 km].

A quantity of bits that indicate the eccentricity of the first satellite in the first indication information is 19, and a value of the eccentricity falls within an interval [0, 0.015].

A quantity of bits that indicate the argument of perigee of the first satellite in the first indication information is 24 bits, and a value of the argument of perigee of the first satellite falls within an interval [0, $2\pi$].

A quantity of bits that indicate the right ascension of the ascending node of the first satellite in the first indication information is 21 bits, and a value of the right ascension of the ascending node of the first satellite falls within an interval [-180°, +180°].

A quantity of bits that indicate the inclination of the first satellite in the first indication information is 20 bits, and a value of the inclination of the first satellite falls within an interval [-90°, +90°].

A quantity of bits that indicate the mean anomaly of the first satellite in the first indication information is 24 bits, and a value of the mean anomaly of the first satellite falls within an interval [0, $2\pi$].

In another possible implementation, the position of the first satellite at the first moment includes at least one of the following: a cross-track position, an along-track position, and a radial position of the first satellite at the first moment.

The velocity of the first satellite includes at least one of the following: a cross-track velocity, an along-track velocity, and a radial velocity of the first satellite at the first moment.

In another possible implementation, the transceiver module 701 is specifically configured to:
send a SIB, where the SIB carries the first indication information. The first indication information indicates one or more RRC parameters, and the one or more RRC parameters include the ephemeris parameter of the first satellite at the first moment.

FIG. 8 is a possible schematic diagram of a structure in which a communication apparatus is a terminal device.

FIG. 8 is a simplified schematic diagram of a structure of a terminal device. For ease of understanding and figure illustration, an example in which the terminal device is a mobile phone is used in FIG. 8. As shown in FIG. 8, the terminal device includes a processor, a memory, a radio frequency circuit, an antenna, and an input/output apparatus.

The processor is mainly configured to: process a communication protocol and communication data, control the terminal device, execute a software program, process data of the software program, and the like.

The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave.

The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, FIG. 8 shows only one memory and one processor. In an actual terminal device product, there may be one or more processors and one or more memories. The memory may also be referred to as a storage medium, a storage device, or the like. The memory may be disposed independently of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device. As shown in FIG. 8, the terminal device includes a transceiver unit 810 and a processing unit 820. The transceiver unit may also be referred to as a transceiver machine, a transceiver, a transceiver apparatus, or the like. The processing unit may also be referred to as a processor, a processing board, a processing module, a processing apparatus, or the like. Optionally, a component configured to implement the receiving function in the transceiver unit 810 may be considered as a receiving unit, and a component configured to implement the sending function in the transceiver unit 810 may be considered as a sending unit. That is, the transceiver unit 810 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 810 is configured to perform a sending operation and a receiving operation of the first communication device in the foregoing method embodiments, and the processing unit 820 is configured to perform an operation other than the receiving/sending operation of the first communication device in the foregoing method embodiments.

When the terminal device is a chip, the chip includes a transceiver unit and a processing unit. The transceiver unit may be an input/output circuit or a communication interface. The processing unit is a processor, a microprocessor, an integrated circuit, or a logic circuit integrated on the chip.

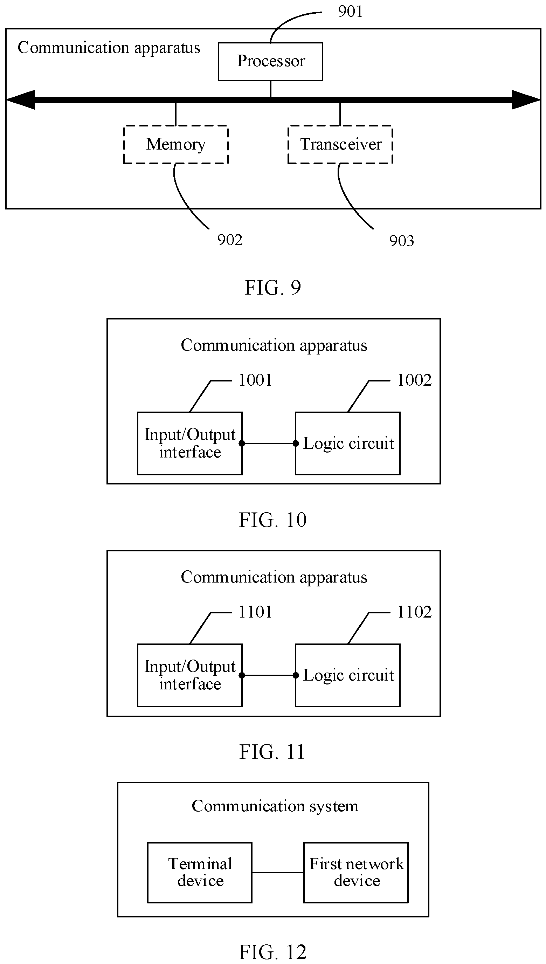

This application further provides a communication apparatus. FIG. 9 is another schematic diagram of a structure of a communication apparatus according to an embodiment of this application. The communication apparatus may be configured to perform the steps performed by the first network device in the embodiment shown in FIG. 5. For details, refer to related descriptions in the foregoing method embodiment.

The communication apparatus includes a processor 901. Optionally, the communication apparatus further includes a memory 902 and a transceiver 903.

In a possible implementation, the processor 901, the memory 902, and the transceiver 903 are separately connected through a bus, and the memory stores computer instructions.

The transceiver module 701 in the foregoing embodiment may be specifically the transceiver 903 in this embodiment. Therefore, specific implementation of the transceiver 903 is not described again. The processing module 701 in the foregoing embodiment may be specifically the processor 901 in this embodiment. Therefore, specific implementation of the processor 901 is not described again.

FIG. 10 is a schematic diagram of another structure of a communication apparatus according to an embodiment of this application. Refer to FIG. 10. The communication apparatus includes an input/output interface 1001 and a logic circuit 1002. The communication apparatus shown in FIG. 10 may be configured to perform the steps performed by the terminal device in the embodiments shown in FIG. 3 and FIG. 5.

Optionally, the logic circuit 1002 may have a function of the processing module 602 in the embodiment shown in FIG. 6. The input/output interface 1001 may have a function of the transceiver module 602 in the embodiment shown in FIG. 6.

The communication apparatus shown in FIG. 10 may perform the technical solutions shown in the foregoing method embodiments. An implementation principle and a beneficial effect of the communication apparatus are similar to those of the foregoing method embodiments, and details are not described herein again.

FIG. 11 is a schematic diagram of another structure of a communication apparatus according to an embodiment of this application. Refer to FIG. 11. The communication apparatus includes an input/output interface 1101 and a logic circuit 1102. The communication apparatus shown in FIG. 11 may be configured to perform the steps performed by the first network device in the embodiment shown in FIG. 5.

Optionally, the logic circuit 1102 may have a function of the processing module 702 in the embodiment shown in FIG. 7. The input/output interface 1101 may have a function of the transceiver module 701 in the embodiment shown in FIG. 7.

The communication apparatus shown in FIG. 11 may perform the technical solutions shown in the foregoing method embodiments. An implementation principle and a beneficial effect of the communication apparatus are similar to those of the foregoing method embodiments, and details are not described herein again.

Refer to FIG. 12. An embodiment of this application further provides a communication system. The communication system includes a terminal device and a first network device. The terminal device is configured to perform all or a part of the steps performed by the terminal device in the embodiments shown in FIG. 3 and FIG. 5. The first network device is configured to perform all or a part of the steps performed by the first network device in the embodiment shown in FIG. 5.

An embodiment of this application further provides a computer program product including instructions. When the computer program product runs on a computer, the computer is enabled to perform the communication methods in the embodiments shown in FIG. 3 and FIG. 5.

An embodiment of this application further provides a computer-readable storage medium, including computer instructions. When the computer instructions are run on a computer, the computer is enabled to perform the communication methods in the embodiments shown in FIG. 3 and FIG. 5.

An embodiment of this application further provides a chip apparatus, including a processor, configured to connect to a memory and invoke a program stored in the memory, so that the processor performs the communication methods in the embodiments shown in FIG. 3 and FIG. 5.

The processor mentioned in any of the foregoing may be a general central processing unit, a microprocessor, an application-specific integrated circuit (application-specific integrated circuit, ASIC), or one or more of integrated circuits configured to control program execution of the communication methods in the embodiments shown in FIG. 3 and FIG. 5. The memory mentioned in any one of the foregoing may be a read-only memory (read-only memory, ROM), another type of static storage device that can store static information and instructions, a random access memory (random access memory, RAM), or the like.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes: any medium that can store program code, a USB flash drive, a removable hard disk, a read-only memory (read-only memory, ROM), a random access memory (random access memory, RAM), a magnetic disk, an optical disc, and the like.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A communication method, wherein a terminal device performs the following method M times, M is an integer greater than or equal to 1, and the method comprises:

obtaining, by the terminal device, first indication information, wherein the first indication information indicates an ephemeris parameter of a first satellite at a first moment;

determining, by the terminal device, a position and a velocity of the first satellite at a second moment based on the ephemeris parameter of the first satellite at the first moment, wherein the second moment is after the first moment; and

if an error of the position of the first satellite at the second moment is less than a first threshold and an error of the velocity of the first satellite at the second moment is less than a second threshold, obtaining, by the terminal device, second indication information, wherein

the second indication information indicates an ephemeris parameter of the first satellite at a third moment, the third moment is before the second moment, a ratio of a bit quantity corresponding to the first indication information or a bit quantity corresponding to the second indication information to a first time interval is less than a third threshold, and the first time interval is a time interval between the first moment and the third moment.

2. The method according to claim 1, wherein the method further comprises:

after the terminal device performs the method M times, outputting, by the terminal device, a bit quantity corresponding to third indication information and a second time interval, wherein the bit quantity corresponding to the third indication information and the second time interval are used by the first satellite to update an ephemeris parameter, wherein

the bit quantity corresponding to the third indication information is a bit quantity corresponding to indication information used by the terminal device to perform the method for the $X^{th}$ time, the second time interval is a time interval used by the terminal device to perform the method for the $X^{th}$ time, a ratio of the bit quantity of the indication information used by the terminal device to perform the method for the $X^{th}$ time to the time interval used by the terminal device to perform the method for the $X^{th}$ time is minimum, and X is an integer greater than or equal to 1 and less than or equal to M.

3. The method according to claim 2, wherein the bit quantity corresponding to the third indication information comprises a bit quantity corresponding to an orbit parameter of the first satellite in each dimension.

4. The method according to any one of claims 1 to 3, wherein indication information and a time interval that are used by the terminal device to perform the method each time comprise at least one of the following:

a different quantity of bits in indication information is used by the terminal device to perform the method each time; and

a different time interval is used by the terminal device to perform the method each time.

5. The method according to any one of claims 1 to 4, wherein the ephemeris parameter of the first satellite at the first moment comprises at least one of the following: a semimajor axis, an eccentricity, an inclination, a right ascension of an ascending node, an argument of perigee, a mean anomaly, a true anomaly, an argument of latitude, and an orbit type identifier of the first satellite.

6. The method according to any one of claims 1 to 5, wherein the ephemeris parameter of the first satellite at the first moment comprises orbit parameters of the first device in a plurality of dimensions at the first moment;

a quantity of bits that indicate an orbit parameter of the first satellite in each dimension at the first moment in the first indication information is related to a weight of the orbit parameter in the dimension, and the weight of the orbit parameter in each dimension is determined based on a type of the first satellite.

7. The method according to any one of claims 1 to 6, wherein the first satellite is in a low-earth orbit position;

a quantity of bits that indicate the semimajor axis of the first satellite in the first indication information is 19 bits, and a value of the semimajor axis falls within an interval [6675 km, 7875 km];

a quantity of bits that indicate the eccentricity of the first satellite in the first indication information is 13 bits, and a value of the eccentricity falls within an interval [0, 0.015];

a quantity of bits that indicate the argument of perigee of the first satellite in the first indication information is 22 bits, and a value of the argument of perigee of the first satellite falls within an interval [0, $2\pi$];

a quantity of bits that indicate the right ascension of the ascending node of the first satellite in the first indication information is 20 bits, and a value of the right ascension of the ascending node of the first satellite falls within an interval [-180°, +180°];

a quantity of bits that indicate the inclination of the first satellite in the first indication information is 20 bits, and a value of the inclination of the first satellite falls within an interval [-90°, +90°];

a quantity of bits that indicate the mean anomaly of the first satellite in the first indication information is 22 bits, and a value of the mean anomaly of the first satellite falls within an interval [0, $2\pi$]; and

a quantity of bits that indicate the orbit type identifier of the first satellite in the first indication information is 2 bits, and the bits that indicate the orbit type identifier of the first satellite in the first indication information indicate that an orbit type of the first satellite is a low-earth orbit.

8. The method according to any one of claims 1 to 6, wherein the first satellite is a medium-earth orbit satellite;

a quantity of bits that indicate the semimajor axis of the first satellite in the first indication information is 23 bits, and a value of the semimajor axis falls within an interval [13378 km, 31378 km];

a quantity of bits that indicate the eccentricity of the first satellite in the first indication information is 13 bits, and a value of the eccentricity falls within an interval [0, 0.015];

a quantity of bits that indicate the argument of perigee of the first satellite in the first indication information is 22 bits, and a value of the argument of perigee of the first satellite falls within an interval [0, $2\pi$];

a quantity of bits that indicate the right ascension of the ascending node of the first satellite in the first indication information is 20 bits, and a value of the right ascension of the ascending node of the first satellite falls within an interval [-180°, +180°];

a quantity of bits that indicate the inclination of the first satellite in the first indication information is 20 bits, and a value of the inclination of the first satellite falls within an interval [-90°, +90°];

a quantity of bits that indicate the mean anomaly of the first satellite in the first indication information is 22 bits, and a value of the mean anomaly of the first satellite falls within an interval [0, $2\pi$]; and

a quantity of bits that indicate the orbit type identifier of the first satellite in the first indication information is 2 bits, and the bits that indicate the orbit type identifier of the first satellite in the first indication information indicate that an orbit type of the first satellite is a medium-earth orbit.

9. The method according to any one of claims 1 to 6, wherein the first satellite is a geostationary earth orbit satellite;

a quantity of bits that indicate the semimajor axis of the first satellite in the first indication information is 10 bits, and a value of the semimajor axis falls within an interval [42163 km, 42165 km];

a quantity of bits that indicate the eccentricity of the first satellite in the first indication information is 9 bits, and a value of the eccentricity falls within an interval [0, 0.0005];

a quantity of bits that indicate the argument of perigee of the first satellite in the first indication information is 22 bits, and a value of the argument of perigee of the first satellite falls within an interval [0, $2\pi$];

a quantity of bits that indicate the right ascension of the ascending node of the first satellite in the first indication information is 20 bits, and a value of the right ascension of the ascending node of the first satellite falls within an interval [-180°, +180°];

a quantity of bits that indicate the inclination of the first satellite in the first indication information is 7 bits, and a value of the inclination of the first satellite falls within an interval [-0.01°, +0.01°];

a quantity of bits that indicate the mean anomaly of the first satellite in the first indication information is 22 bits, and a value of the mean anomaly of the first satellite falls within an interval [0, $2\pi$]; and

a quantity of bits that indicate the orbit type identifier of the first satellite in the first indication information is 2 bits, and the bits that indicate the orbit type identifier of the first satellite in the first indication information indicate that an orbit type of the first satellite is a geostationary earth orbit.

10. The method according to any one of claims 1 to 6, wherein a quantity of bits that indicate the semimajor axis of the first satellite in the first indication information is 33 bits, and a value of the semimajor axis falls within an interval [6500 km, 43000 km];

a quantity of bits that indicate the eccentricity of the first satellite in the first indication information is 19 bits, and a value of the eccentricity falls within an interval [0, 0.015];

a quantity of bits that indicate the argument of perigee of the first satellite in the first indication information is 24 bits, and a value of the argument of perigee of the first satellite falls within an interval [0, $2\pi$];

a quantity of bits that indicate the right ascension of the ascending node of the first satellite in the first indication information is 21 bits, and a value of the right ascension of the ascending node of the first satellite falls within an interval [-180°, +180°];

a quantity of bits that indicate the inclination of the first satellite in the first indication information is 20 bits, and a value of the inclination of the first satellite falls within an interval [-90°, +90°]; and
a quantity of bits that indicate the mean anomaly of the first satellite in the first indication information is 24 bits, and a value of the mean anomaly of the first satellite falls within an interval [0, $2\pi$].

11. The method according to any one of claims 1 to 10, wherein the error of the position of the first satellite at the second moment is determined based on at least one of a cross-track position error, an along-track position error, and a radial position error of the first satellite at the second moment.

12. The method according to any one of claims 1 to 11, wherein the error of the velocity of the first satellite at the second moment is determined based on at least one of a cross-track velocity error, an along-track velocity error, and a radial velocity error of the first satellite at the second moment.

13. The method according to any one of claims 1 to 12, wherein the first indication information is carried in a system information block SIB, the first indication information indicates one or more radio control resource RRC parameters, and the one or more RRC parameters comprise the ephemeris parameter of the first satellite at the first moment.

14. A communication method, wherein the method comprises:

determining, by a first network device, an ephemeris parameter of a first satellite at a first moment;
sending, by the first network device, first indication information, wherein the first indication information indicates the ephemeris parameter of the first satellite at the first moment;
determining, by the first network device, an ephemeris parameter of the first satellite at a third moment; and
sending, by the first network device, second indication information, wherein
the second indication information indicates the ephemeris parameter of the first satellite at the third moment, the third moment is after the first moment, a ratio of a bit quantity corresponding to the first indication information or a bit quantity corresponding to the second indication information to a first time interval is less than a third threshold, and the first time interval is a time interval between the first moment and the third moment.

15. The method according to claim 14, wherein the ephemeris parameter of the first satellite at the first moment comprises at least one of the following: a semimajor axis, an eccentricity, an inclination, a right ascension of an ascending node, an argument of perigee, a mean anomaly, a true anomaly, an argument of latitude, and an orbit type of the first satellite.

16. The method according to claim 14 or 15, wherein the ephemeris parameter of the first satellite at the first moment comprises orbit parameters of the first satellite in a plurality of dimensions at the first moment, and the method further comprises:

determining, by the first network device, a weight of an orbit parameter in each dimension in the orbit parameters in the plurality of dimensions based on a type of the first satellite; and
determining, by the first network device based on the weight of the orbit parameter in each dimension, a quantity of bits that indicate the orbit parameter in each dimension in the first indication information.

17. The method according to any one of claims 14 to 16, wherein the first satellite is in a low-earth orbit position;

a quantity of bits that indicate the semimajor axis of the first satellite in the first indication information is 19 bits, and a value of the semimajor axis falls within an interval [6675 km, 7875 km];
a quantity of bits that indicate the eccentricity of the first satellite in the first indication information is 13 bits, and a value of the eccentricity falls within an interval [0, 0.015];
a quantity of bits that indicate the argument of perigee of the first satellite in the first indication information is 22 bits, and a value of the argument of perigee of the first satellite falls within an interval [0, $2\pi$];
a quantity of bits that indicate the right ascension of the ascending node of the first satellite in the first indication information is 20 bits, and a value of the right ascension of the ascending node of the first satellite falls within an interval [-180°, +180°];
a quantity of bits that indicate the inclination of the first satellite in the first indication information is 20 bits, and a value of the inclination of the first satellite falls within an interval [-90°, +90°]; and
a quantity of bits that indicate the mean anomaly of the first satellite in the first indication information is 22 bits, and a value of the mean anomaly of the first satellite falls within an interval [0, $2\pi$]; and
a quantity of bits that indicate the orbit type of the first satellite in the first indication information is 2 bits, and the bits that indicate the orbit type identifier of the first satellite in the first indication information indicate that an orbit type of the first satellite is a low-earth orbit.

18. The method according to any one of claims 14 to 16, wherein the first satellite is a medium-earth orbit satellite;

a quantity of bits that indicate the semimajor axis of the first satellite in the first indication information is 23 bits, and a value of the semimajor axis falls within an interval [13378 km, 31378 km];
a quantity of bits that indicate the eccentricity of the first satellite in the first indication information is 13 bits, and a value of the eccentricity falls within an interval [0, 0.015];
a quantity of bits that indicate the argument of perigee of the first satellite in the first indication information is 22 bits, and a value of the argument of perigee of the first satellite falls within an interval [0, $2\pi$];
a quantity of bits that indicate the right ascension of the ascending node of the first satellite in the first indication information is 20 bits, and a value of the right ascension of the ascending node of the first satellite falls within an interval [-180°, +180°];
a quantity of bits that indicate the inclination of the first satellite in the first indication information is 20 bits, and a value of the inclination of the first satellite falls within an interval [-90°, +90°];
a quantity of bits that indicate the mean anomaly of the first satellite in the first indication information is 22 bits, and a value of the mean anomaly of the first satellite falls within an interval [0, $2\pi$]; and
a quantity of bits that indicate the orbit type of the first satellite in the first indication information is 2 bits, and the bits that indicate the orbit type identifier of the first satellite in the first indication information indicate that an orbit type of the first satellite is a medium-earth orbit.

19. The method according to any one of claims 14 to 16, wherein the first satellite is a geostationary earth orbit satellite;

a quantity of bits that indicate the semimajor axis of the first satellite in the first indication information is 10 bits, and a value of the semimajor axis falls within an interval [42163 km, 42165 km];
a quantity of bits that indicate the eccentricity of the first satellite in the first indication information is 9 bits, and a value of the eccentricity falls within an interval [0, 0.0005];
a quantity of bits that indicate the argument of perigee of the first satellite in the first indication information is 22 bits, and a value of the argument of perigee of the first satellite falls within an interval [0, $2\pi$];
a quantity of bits that indicate the right ascension of the ascending node of the first satellite in the first indication information is 20 bits, and a value of the right ascension of the ascending node of the first satellite falls within an interval [-180°, +180°];
a quantity of bits that indicate the inclination of the first satellite in the first indication information is 7 bits, and a value of the inclination of the first satellite falls within an interval [-0.01°, +0.01°];
a quantity of bits that indicate the mean anomaly of the first satellite in the first indication information is 21 bits, and a value of the mean anomaly of the first satellite falls within an interval [0, $2\pi$]; and
a quantity of bits that indicate the orbit type of the first satellite in the first indication information is 2 bits, and the bits that indicate the orbit type identifier of the first satellite in the first indication information indicate that an orbit type of the first satellite is a geostationary earth orbit.

20. The method according to any one of claims 14 to 16, wherein a quantity of bits that indicate the semimajor axis of the first satellite in the first indication information is 33 bits, and a value of the semimajor axis falls within an interval [6500 km, 43000 km];

a quantity of bits that indicate the eccentricity of the first satellite in the first indication information is 19, and a value of the eccentricity falls within an interval [0, 0.015];
a quantity of bits that indicate the argument of perigee of the first satellite in the first indication information is 24 bits, and a value of the argument of perigee of the first satellite falls within an interval [0, $2\pi$];
a quantity of bits that indicate the right ascension of the ascending node of the first satellite in the first indication information is 21 bits, and a value of the right ascension of the ascending node of the first satellite falls within an interval [-180°, +180°];
a quantity of bits that indicate the inclination of the first satellite in the first indication information is 20 bits, and a value of the inclination of the first satellite falls within an interval [-90°, +90°]; and
a quantity of bits that indicate the mean anomaly of the first satellite in the first indication information is 24 bits, and a value of the mean anomaly of the first satellite falls within an interval [0, $2\pi$].

21. The method according to any one of claims 14 to 20, wherein the sending, by the first network device, first indication information comprises:

sending, by the first network device, a system information block SIB, wherein the SIB carries the first indication information, the first indication information indicates one or more radio control resource RRC parameters, and the one or more RRC parameters comprise the ephemeris parameter of the first satellite at the first moment.

22. A communication apparatus, wherein the communication apparatus comprises a transceiver module configured to perform receiving and sending operations in the method according to any one of claims 1 to 13, and a processing module configured to perform a processing operation in the method according to any one of claims 1 to 13.

23. A communication apparatus, wherein the communication apparatus comprises a transceiver module configured to perform receiving and sending operations in the method according to any one of claims 14 to 21, and the communication apparatus further comprises a processing module configured to perform a processing operation in the method according to any one of claims 14 to 21.

24. A communication apparatus, wherein the communication apparatus comprises an input/output interface and a logic circuit, the input/output interface is configured to perform an input or output operation in the method according to any one of claims 1 to 13, and the logic circuit is configured to perform a processing operation according to any one of claims 1 to 13.

25. A communication apparatus, wherein the communication apparatus comprises an input/output interface and a logic circuit, the input/output interface is configured to perform an input or output operation according to any one of claims 14 to 21, and the logic circuit is configured to perform a processing operation according to any one of claims 14 to 21.

26. A communication apparatus, wherein the communication apparatus comprises a processor, and the processor is configured to execute a computer program or computer instructions in a memory, to perform the method according to any one of claims 1 to 13, or perform the method according to any one of claims 14 to 21.

27. The communication apparatus according to claim 26, wherein the communication apparatus further comprises the memory.

28. A computer-readable storage medium, wherein a computer program is stored in the computer-readable storage medium, and when the computer program is executed by a communication apparatus, the communication apparatus is enabled to perform the method according to any one of claims 1 to 13, or the communication apparatus is enabled to perform the method according to any one of claims 14 to 21.

29. A computing program product, comprising computer-executable instructions, wherein when the computer-executable instructions are run on a computer, the computer is enabled to perform the method according to any one of claims 1 to 13 or claims 14 to 21.

FIG. 1

FIG. 2

A terminal device obtains first indication information, where the first indication information indicates an ephemeris parameter of a first device at a first moment — 301

The terminal device determines a position and a velocity of the first device at a second moment based on the ephemeris parameter of the first device at the first moment — 302

If an error of the position of the first device at the second moment is less than a first threshold and an error of the velocity of the first device at the second moment is less than a second threshold, the terminal device obtains second indication information — 303

After the terminal device performs the method M times, the terminal device outputs a bit quantity corresponding to third indication information and a second time interval — 304

FIG. 3

Radial position and radial velocity

Along-track position and along-track velocity

Along Track

Radial

Cross Track

Cross-track position and cross-track velocity

Error

True

Predicated

$R_{true}$

$R_{pre}$

Move

Satellite

FIG. 4A

FIG. 4B

Terminal device

First network device

501a: Determine a weight of an orbit parameter of a first device in each dimension at a first moment based on a type of the first device

501b: Generate first indication information based on the weight of the orbit parameter of the first device in each dimension at the first moment

501: First indication information

502: Determine a position and a velocity of the first device at a second moment based on the ephemeris parameter of the first device at the first moment

503a: Actual position and actual velocity of the first device at the second moment

503: If an error of the position of the first device at the second moment is less than a first threshold and an error of the velocity of the first device at the second moment is less than a second threshold, receive second indication information

504: After the terminal device performs the method M times, output a bit quantity corresponding to third indication information and a second time interval

FIG. 5

Communication apparatus

601

602

Transceiver module

Processing module

FIG. 6

FIG. 7

FIG. 8

901

Communication apparatus

Processor

Memory

Transceiver

902

903

**FIG. 9**

Communication apparatus

1001

1002

Input/Output interface

Logic circuit

**FIG. 10**

Communication apparatus

1101

1102

Input/Output interface

Logic circuit

**FIG. 11**

Communication system

Terminal device

First network device

**FIG. 12**

## INTERNATIONAL SEARCH REPORT

| International application No. |
| --- |
| **PCT/CN2022/124994** |

**A.    CLASSIFICATION OF SUBJECT MATTER**

   G01S 19/27(2010.01)i;  G01S 19/24(2010.01)i;  H04B 7/185(2006.01)i

According to International Patent Classification (IPC) or to both national classification and IPC

**B.    FIELDS SEARCHED**

Minimum documentation searched (classification system followed by classification symbols)

   H04B; G01S

Documentation searched other than minimum documentation to the extent that such documents are included in the fields searched

Electronic data base consulted during the international search (name of data base and, where practicable, search terms used)

   CNTXT, VEN, ENTXT, CNKI: 星历, 参数, 时间, 同步, 时频, 偏移, 多普勒, 位置, 阈值, satellite ephemeris, parameter, Doppler shift, synchroniz+, time-frequency, location, threshold

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112202488 A (HYTERA COMMUNICATIONS CO., LTD.) 08 January 2021 (2021-01-08)<br>       entire description | 1-29 |
| A | CN 109991634 A (SHANGHAI ADVANCED AVIONICS COMPANY LTD.) 09 July 2019 (2019-07-09)<br>       entire description | 1-29 |
| A | CN 112147644 A (TSINGHUA UNIVERSITY; SHANGHAI QINGSHEN TECHNOLOGY DEVELOPMENT CO., LTD.) 29 December 2020 (2020-12-29)<br>       entire description | 1-29 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 December 2022** | **05 January 2023** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/124994**

| Patent document cited in search report | | | Publication date (day/month/year) | Patent family member(s) | | | Publication date (day/month/year) |
|---|---|---|---|---|---|---|---|
| CN | 112202488 | A | 08 January 2021 | None | | | |
| CN | 109991634 | A | 09 July 2019 | WO | 2020186536 | A1 | 24 September 2020 |
| CN | 112147644 | A | 29 December 2020 | None | | | |

Form PCT/ISA/210 (patent family annex) (January 2015)

**EP 4 421 533 A1**

**REFERENCES CITED IN THE DESCRIPTION**

**Patent documents cited in the description**

- CN 202111302581